# EUROPEAN PATENT APPLICATION

(11) **EP 1 334 861 A1**
(43) Date of publication of application: **13.08.2003**
(21) Application number: 01976755.7
(22) Date of filing: 18.10.2001
(51) Int. Cl.: B60K 17/06, B60K 17/02, B60K 17/28, B60K 17/10, F16H 57/02

(54) **POWER TRANSMISSION DEVICE FOR VEHICLE**

(30) Priority: 20.10.2000 JP 2000320963; 20.10.2000 JP 2000320964; 20.10.2000 JP 2000320965; 20.10.2000 JP 2000320966
(71) Applicant: YANMAR AGRICULTURAL EQUIPMENT CO., LTD., Osaka-fu 530-0013 (JP)
(72) Inventor: NARUMIYA, Yasuyuki, YANMAR AGRICULTURAL EQUIPMENT, Osaka-shi, Osaka 530-0013 (JP); KUBOTA, Yukio, YANMAR AGRICULTURAL EQUIPMENT CO, Osaka-shi, Osaka 530-0013 (JP)
(74) Representative: Henkel, Feiler, Hänzel
(86) International application number: JP0109172
(87) International publication number: WO02034561

(57) **Abstract**

A power transmission device for a vehicle successively forms a clutch housing (7) incorporating an engine output portion (20) and a transmission housing (9) incorporating a differential mechanism (64) of drive axles are successively formed lengthwise from an engine (5). A center unit (C1, C2 or C3) serves as an assembly of a center plate (12, 12' or 12") to which a transmission unit or transmission units (U) are attached disposed between the common clutch housing (7) and the common transmission housing (9) so that a transmission unit (U) of center units (C1, C2, C3) is stored inside the clutch housing (7) or the transmission housing (9), and the center units (C1, C2, C3) are constructed such a way that the transmission unit (U) is attached to the center plates (12, 12', 12").

## Description

### Field of the Invention

The present invention relates to a power transmission device for a vehicle comprised of a clutch housing and a transmission housing which are formed successively from an engine, wherein appropriate parts are so unitized as to facilitate attachment and detachment thereof into the clutch housing and the transmission casing, thereby providing various modes of power transmission devices for fitting uses or requirements while sharing the common clutch housing and the common transmission housing.

### Background Art

Conventionally, there is a well-known power transmission device for a vehicle such as a tractor etc., which is constructed so that a clutch housing and a transmission housing are formed successively from an engine to rear axles serving as drive axles. In order to reduce production costs, various attempts are conventionally made to provide a common clutch housing and a common transmission housing, which are applicable to various power transmission devices of different modes.

For example, in the power transmission device disclosed in the Japanese Utility Model Laid Open Gazette Sho. 59-110468, a clutch housing is also used as rear axle casings, and can be alternatively provided between one for a hydraulic transmission mode and another for mechanical (gear type) transmission mode.

Moreover, in the power transmission device disclosed in the Japanese Patent Laid Open Gazette Hei. 5-169995, while a common transmission housing is used, different clutch housings are provided in correspondence to different modes: One clutch housing corresponds to a power transmission device including a main clutch shared between a PTO transmission system and a traveling transmission system; and another clutch housing corresponds to a power transmission device including a PTO clutch added to a main clutch so as to provide independent clutches for a PTO transmission system and a traveling transmission system.

However, none of the above official gazettes discloses a power transmission device having both a common clutch housing and a common transmission housing while providing various transmission modes. Introduction of the art disclosed in one of the official gazettes into the art disclosed in another of the official gazettes does not result in such a power transmission device. For example, according to the art disclosed in the Japanese Patent Laid Open Gazette Hei. 5-169995, a common transmission housing may be used to construct a power transmission device of either the mechanical transmission style or the hydraulic transmission style. However, the above two conventional arts disclosed in the official gazettes do not suggest to provide two types of power transmission devices: one including a clutch for a PTO transmission system independent of a clutch for a traveling transmission system; and the other including a main clutch shared between the PTO transmission system and the traveling transmission system, while both the power transmission devices share a common clutch housing and a common transmission housing.

In the power transmission device disclosed in the Japanese Patent Laid Open Gazette Hei. 5-178103, a common transmission housing is used to provide either a hydraulic or mechanical (gear type) power transmission device.

Moreover, as disclosed in the Japanese Patent Laid Open Gazette Hei. 5-278481, the Japanese Patent Laid Open Gazette Hei. 6-62611, etc., there is a power transmission device including a clutch housing and a transmission housing arranged in the above-mentioned way, wherein the power transmission device includes a mid PTO transmission system which is applicable to a vehicle having a mid-mount working machine such as a mower disposed between front wheels and rear wheels.

In the power transmission device disclosed in the Japanese Patent Laid Open Gazette Hei. 5-278481, a mid PTO shaft is protruded forward from a lower portion of a transmission housing, and a transmission system to the mid PTO shaft is constructed in the transmission housing so as to branch from a main (rear) PTO transmission system. Since the lower portion of the transmission housing is expanded downward for arrangement of the mid PTO shaft, the vehicle comes to have such a low ground clearance as to spoil its defense against obstacles on ground.

In the power transmission device disclosed in the Japanese Patent Laid Open Gazette Hei. 6-62611, a front portion of the transmission housing is partly expanded sideward, the mid PTO shaft is protruded forward from the expanded portion, and the mid PTO transmission system is constructed in the transmission housing from a PTO speed change gear mechanism used in common with the rear PTO transmission system to the mid PTO shaft. This structure secures a sufficient ground clearance, however, the transmission housing integrally forming the expanded portion is complicated in structure and expensive for its forming process. Moreover, even if the mid PTO shaft is removed for change of mode, the expanded portion remains in the transmission housing so as not only to spoil its appearance but also to reduce a space for arrangement of a linkage, etc.

In any of the above structures, the mid PTO transmission system having a mid PTO clutch is assembled in a transmission mechanism in the transmission housing, thereby being complicated so that it is difficult to attach or detach only the arrangement portion of the mid PTO shaft into and from the transmission ho using.

Moreover, there is a fear that the PTO shaft rotates inertially in spite of disengagement of a clutch thereof so as to unexpectedly hit against another thing and damage it. Especially, it is serious when a working machine such as a mower is connected to the PTO shaft. Therefore, a well-known art has a PTO shaft which is braked while the PTO clutch is disengaged.

For example, according to the power transmission device disclosed in the Japanese Patent Laid Open Gazette Hei. 10-24746, a PTO clutch is disposed in an upper inside of the transmission housing, a PTO brake serving as an inertia brake is interposed in a power train between the PTO clutch and the mid PTO shaft and disposed in front of a differential gear. The PTO clutch and the PTO brake are connected by a linkage mechanism. However, the PTO clutch and the PTO brake are apart from each other in location, thereby complicating assembly of each of the PTO clutch and the PTO brake, and complicating assembly of the linkage mechanism for connecting them. Moreover, the number of parts increases so as to increase costs.

Moreover, in the power transmission device disclosed in the Japanese Patent Laid Open Gazette Hei. 6-137349, hydraulically actuating clutch and brake for PTO are juxtaposed on a PTO transmission shaft (that is, on the same axis). The PTO clutch is engaged by supply of pressure oil, and disengaged by release of pressure oil and by spring force. The PTO brake is put off by supply of pressure oil, and put on by release of pressure oil and by spring force. The hydraulically actuating PTO clutch and brake need a hydraulic pump, a hydraulic valve, piping, etc., thereby increasing costs and making it difficult to change of transmission mode in connection with attachment or removal of the PTO clutch or the PTO brake.

Furthermore, there is a well-known power transmission device for a vehicle such as a tractor, which comprises a main speed change mechanism and an auxiliary speed change mechanism usually arranged in tandem on a traveling transmission system, while a hydrostatic transmission (hereinafter referred to as "HST") serves as the main speed change mechanism.

An example of a power transmission device having this arrangement of the HST is disclosed in the Japanese Patent Laid Open Gazette Hei. 9-11769. In the power transmission device, a transmission housing incorporating an auxiliary speed change mechanism also incorporates an HST serving as a main speed change mechanism. A speed control shaft for changing capacity of the HST (by operating a movable swash plate) projects sideward from the transmission housing. An arm fixed on the speed control shaft is connected with a main speed change lever through a linkage, etc. Such an arrangement of HST causes a problem that noise generated by reciprocation of plungers of a hydraulic pump in actuating HST directly leaks outward from the transmission housing through the speed control shaft and the arm fixed thereto, thereby increasing the noise around the portion of the transmission housing incorporating the HST. Moreover, there is also a problem that a horizontal input shaft (a pump shaft) and a horizontal output shaft (motor shaft) are juxtaposed in the vertical row so that the bottom end of the HST becomes so low as to reduce the ground clearance.

Moreover, in the power transmission device disclosed in the Japanese Patent Laid Open Gazette Hei. 5-155260, an HST is disposed in a housing between a clutch housing incorporating a main clutch provided on an output shaft of an engine and a transmission housing incorporating an auxiliary speed change mechanism. An arm is fixed at one end thereof to a speed control shaft of the HST, and a pin is put through a slot formed in the other end portion of the arm. The pin is also put through a slot formed in another operating arm disposed outside the housing, and the operating arm is connected through a linkage or so on to an accelerator pedal depressed by a driver. However, the linkage between the accelerator pedal and the speed control shaft includes such a slack portion as to cause inaccurate reaction of the HST to the depression of the pedal.

Moreover, this structure device also has horizontal pump and motor shafts juxtaposed in the vertical row, thereby causing the similar problem of reducing ground clearance. Additionally, when a space for arranging the linkage is ensured from a side of the HST housing, the space becomes vertically long and make a large dead space in which the linkage is not arranged.

### Disclosure of the Invention

The present invention relates to a power transmission device for a vehicle, wherein a clutch housing and a transmission housing are successively formed lengthwise from an engine. A first object of the present invention is to provide the power transmission device for a vehicle, which enables its various portions such as a main speed change mechanism, a PTO clutch, a front-wheel drive mechanism, etc. to be changed in mode while both the clutch housing and the transmission housing are used in common.

In order to attain the first object, the present invention provides the power transmission device for a vehicle, wherein a center plate to which one or more transmission units selected from various transmission units are attached is disposed between the common clutch housing and the common transmission housing so that the attached transmission units is arranged in the clutch housing or the transmission housing.

With respect to the transmission units, some types are prepared for each of various mechanisms such as a main speed change mechanism, a PTO speed change mechanism, a front-wheel drive mechanism and an auxiliary speed change mechanism, and constructed as respective transmission units. For example, a combination of a mechanical (gear type) main speed change unit and a reverser unit for switching the traveling direction between forward and rearward directions is prepared as a transmission unit of the main speed change mechanism. An HST unit is prepared instead of the combination.

Of the transmission units, either the HST unit or the reverser unit, which must be disposed in the clutch housing, is selectively attached to the center plate so as to be disposed in the clutch housing.

While various power transmission devices are provided by the above-mentioned construction, change of mode of the power transmission device can be made easily only by exchanging the transmission unit attached to the center plate for another transmission unit. Even when the attached transmission unit is changed, it is possible in the same production line to interpose the center plate between the clutch housing and the transmission housing so as to install the transmission unit in the clutch housing or the transmission housing, thereby leading to quick respondence to change of the number of production in every mode. The clutch housing and the transmission housing, which are heavy and large parts, can be shared without change thereof corresponding to every mode. What is necessary is just to prepare so many small transmission units attached to the center plate as to correspond to variation of mode, thereby facilitating inventory control. Furthermore, each transmission unit can be also held in costs by using common shafts, gears and so on.

Moreover, a mid PTO unit having a mid PTO shaft and an input shaft support is constructed as a special transmission unit. The mid PTO unit is detachably installed into the transmission housing by inserting the input shaft support into the transmission housing through a hole, which is open in a side surface of the transmission housing. To the input shaft of the mid PTO unit is introduced power branching from the main (rear) PTO transmission system. In the state where the mid PTO unit is installed on the transmission housing, the mid PTO shaft projects (forward) from a housing of the mid PTO unit mounted on the outer side portion of the transmission housing.

In this way, the common transmission housing is used so as to facilitate correspondence to whether the mid PTO transmission system exists or not. Also, the mid PTO unit attached on the side portion of the transmission housing facilitates its maintenance or change of gears, etc., for changing the number of rotations. Furthermore, since the mid PTO unit is not mounted below the transmission housing but mounted sidewise, the ground clearance of the vehicle doesn't become low, and a dead space in the side of the transmission housing can be utilized effectively.

If the insertion hole opened in the side surface of the transmission housing is disposed on the side closer to the rear portion thereof (on the side apart from the input portion of the mid mount working machine), the projecting position of the mid PTO shaft moves rearward in comparison with the mid PTO shaft projecting from a front end portion of the conventional transmission housing. Therefore, the knuckle of the transmission shaft interposed between the input portion of the mid mount working machine and the mid PTO shaft is small so as to decrease loss of power transmission and fluctuation of angular velocity, etc.

Moreover, a mid PTO clutch may be provided on the mid PTO shaft in a housing of the mid PTO unit. Therefore, due to whether the clutch is provided in the housing, two modes with respect to clutch operation of the mid PTO transmission system may be selectively prepared while change of design of the transmission housing is unnecessary. In one of the two modes, the clutch operation of the mid PTO system can be carried out independent of the clutch of the main PTO system, and in the other mode, the clutch operation of the mid PTO transmission system is carried out by the clutch operation of the main PTO system.

In a main PTO clutch, a PTO clutch unit serves as a combination of a dry-type PTO clutch and a dry-type PTO brake, which are provided in series on a common PTO transmission shaft and are operated by one operation device. The operation device is switched in location among three positions, which are a braking position for clutch-off and brake-on, a neutral position for clutch-off and brake-off, and a clutch on position for clutch-on and brake-off. In this way, the PTO clutch unit is so constructed so as to facilitate its operation, and to be compact and low in cost in comparison with that of wet-type.

In case the main speed change mechanism of the traveling transmission system is constructed by the HST unit, the main clutch, which is provided near an engine flywheel and shared between the traveling transmission system and the PTO transmission system, becomes unnecessary by installing the PTO clutch unit in the power transmission device.

In case the mid PTO transmission system is provided, the PTO clutch unit is provided on the PTO transmission system above a branch point, where the PTO transmission system branches into the main PTO system and the mid PTO system, so that original clutch and brake of the mid PTO transmission system become unnecessary for synchronizing clutch and inertia brake operation between the main PTO and the mid PTO.

The PTO clutch unit may be provided in an overhead clearance of a differential gear unit in the transmission housing so as to keep the compactness of the transmission housing. Since this overhead clearance is near a driver's seat disposed above the transmission housing, a linkage interposed between the PTO clutch unit and the operation device (such as a lever) near the driver's seat becomes so short as to decrease loss of power transmission and to be simplified.

In case the HST unit serves as the main speed change mechanism in the clutch housing, a hydraulic pump and a hydraulic motor are disposed up and down on the center plate while horizontal pump and motor shafts are aligned in a row which is inclined to the vertical line.

Therefore, in the opposite side to the inclined side of the pump and motor shafts within the clutch housing is formed a space, which is used for arranging a noisy speed control shaft in the clutch housing, so as to make the noise therefrom hard to be heard outside the clutch housing, thereby improving an operating environment of an driver. The space for the linkage is substantially triangularly formed between the inclined HST unit and the housing when viewed in front, and is the minimum space for arranging the linkage so as to keep compactness of the linkage.

Moreover, in comparison with a lower motor or pump shaft of an HST aligned vertically below the other pump or motor shaft, since either the lower motor or pump shaft (generally, the motor shaft) is disposed in such a higher position that a counter shaft, a front-wheel drive shaft, etc. engaged with the motor shaft arise so as to increase ground clearance of the vehicle.

Furthermore, the linkage mechanism engaged with the speed control shaft is also disposed in the clutch housing so as not to be exposed to dust and muddy water, thereby being improved in durability and reliability thereof. In addition, the linkage is not provided with a conventional slack portion such including a slot, etc., thereby ensuring accurate reaction of the HST.

The above and further objects and features and effects of the invention will more appear from the following description taken in connection with the accompanying drawing.

### Brief Description of the Drawings

Fig. 1 is a side view of a tractor serving as a vehicle to which a power transmission device of the present invention is applied.
Fig. 2 is a schematic plan view of a common clutch housing and a common transmission housing constituting a power transmission device according to the present invention, showing an example of arrangement of various transmission units, serving as component elements of the power transmission device, in the clutch housing and the transmission housing.
Fig. 3 is a table showing an example of interchangeability of the transmission units shown in Fig. 2, serving as a main speed change mechanism and a PTO transmission system.
Figs. 4(a) - 4(d) are schematic side views of the power transmission devices of the present invention, showing some examples of layout of the transmission units in the clutch housing and the transmission housing in correspondence to variety of modes.
Fig. 5 is a sectional side view of the power transmission device wherein a center unit C1 shown in Fig. 3(a) is installed.
Fig. 6 is a sectional side view of the power transmission device wherein the center unit C1 shown in Fig. 3(a) and a PTO clutch unit are installed.
Fig. 7 is a sectional side view of the power transmission device wherein a center unit C2 shown in Fig. 3(b) is installed.
Fig. 8 is a sectional side view of the power transmission device wherein a center unit C3 shown in Fig. 3(c) is installed.
Fig. 9 is a sectional side view of the power transmission device wherein the center unit C3 shown in Fig. 3(d) and a mid PTO unit 111 are installed.
Fig. 10 is a sectional plan view of a common rear-wheel differential gear unit 64, which is used for each mode of the power transmission device.
Fig. 11 is a sectional side view of a front half portion of the center unit C1 installed in the power transmission device shown in Fig. 4(a) and Fig. 5, mainly showing a reverser unit 50 installed in a clutch housing 7.
Fig. 12 is a sectional side view of a main speed change gear unit 35, an auxiliary speed change gear unit 30, and a PTO speed change gear unit 80, which are positioned in the rear half portion of the center unit C1 installed in the power transmission device shown in Fig. 4(a) and Fig. 5, and installed in a first room R1 of the transmission housing 9.
Fig. 13 is a sectional side view of a creep gear unit 57, which is installed in an opening 9c of the first room R1 of the transmission housing 9 shown in Fig. 12.
Fig. 14 is a sectional front view of a reversing mechanism, which is attached to the PTO speed change gear unit 80 shown in Fig. 12.
Fig. 15 is a sectional side view of a front-wheel drive unit 75, which is installed in the first room R1 of the transmission housing 9.
Fig. 16 is a sectional side view of a PTO reduction unit 110, which is positioned in the third room R3 of the transmission housing 9.
Fig. 17 is a sectional side view of a PTO clutch unit 18, which can be installed in the second room R2 of the transmission housing 9.
Fig. 18 is a sectional side view of a main speed change gear unit 35', a PTO speed change gear unit 80', and an auxiliary speed change gear unit 30', which are positioned in the center unit C2 installed in the power transmission device shown in Fig. 4(b) and Fig. 7, and provided in the first room R1 of the transmission housing 9.
Fig. 19 is a sectional side view of the center unit C3 installed in the power transmission device shown in Fig. 4(c) and Fig. 8, showing an HST unit 130 provided in the clutch housing 7 and the auxiliary speed change gear unit 30' provided in the first room R1 of the transmission housing 9.
Fig. 20 is an arrow sectional view of the line X-X in Fig. 8, including an arrow sectional view of the line Y-Y in Fig. 8 drawn in phantom lines.
Fig. 21 is a sectional side view of a rear PTO change gear unit 127, which is positioned in the third room R3 of the transmission housing 9 as shown in Fig. 4(d) and Fig. 9.
Fig. 22 is a rear view of the transmission housing 9, showing a state in which a rear cover 8 is removed in the power transmission device in case of installing the rear PTO change gear unit 127 in the third room R3 of the transmission housing 9.
Fig. 23 is a sectional side view of a mid PTO unit 111.
Fig. 24 is a front view of the power transmission device in case of installing the center unit C1, showing each shaft configuration in the transmission housing 9 and the mid PTO unit 111.

### Best Mode for Carrying out the Invention

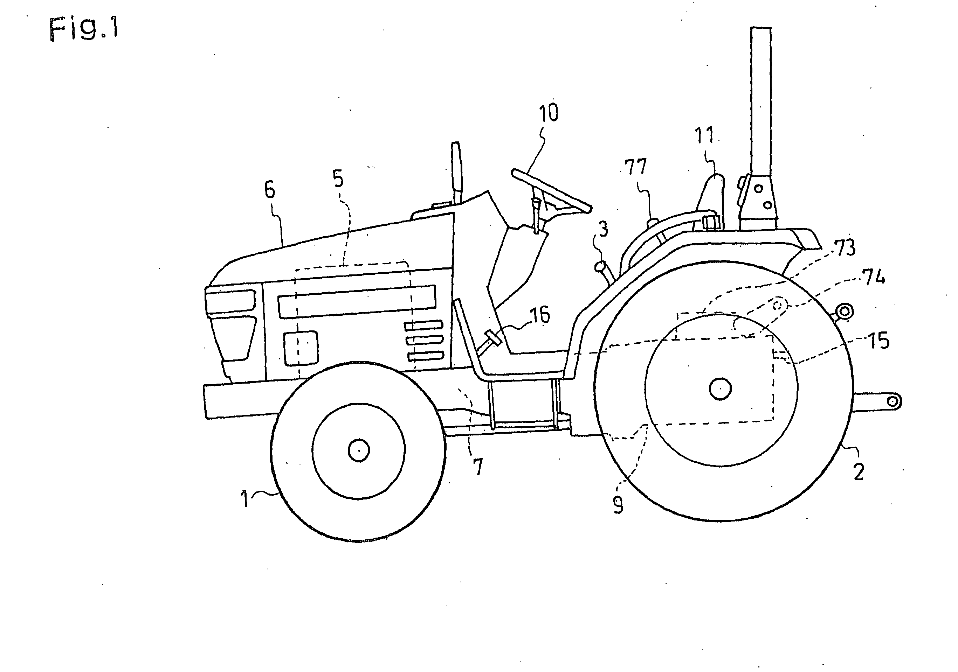

In accordance with Fig. 1, description will be given on a general construction of a tractor serving as an example of a vehicle to which a power transmission device of the present invention is applicable. Front wheels 1 and rear wheels 2 are rotatably supported at front and rear portions of the tractor. An engine 5 is disposed in a bonnet 6 at the front portion of the tractor. A steering wheel 10 is provided behind the bonnet 6. A driver's seat 11 is provided behind steering wheel 10. A main speed change lever 3 is provided beside the driver's seat 11. Moreover, unshown various operation means such as a reverser lever, an auxiliary speed change lever, a PTO speed change lever, a drive mode (2WD/4WD) changer, etc. are provided beside the driver's seat 11, near the steering wheel 10, or another position.

A clutch housing 7 is disposed in the rear portion of the engine 5, and a transmission housing 9 is disposed successively from the rear portion of the clutch housing 7. The power of the engine 5 is transmitted to the rear wheels 2 through a traveling transmission system constructed in the clutch housing 7 and the transmission housing 9. It is also possible to transmit the power from the transmission mechanism in the transmission housing 9 to the front wheels 1 simultaneously.

The power of the engine 5 is transmitted to a (rear) PTO shaft 15 which is projected from the rear end of the transmission housing 9, and transmitted from the PTO shaft 15 through universal joints, etc. to a working machine, which is vertically movably attached to the rear end of the tractor body through a working machine installer. Moreover, a hydraulic casing 73 is mounted on the upper portion of the transmission housing 9. A hydraulic cylinder disposed in the hydraulic casing 73 is actuated to rotate lift arms 74 of the working machine installer so as to vertically move the working machine. A control valve is attached to the hydraulic case 73 so as to hydraulically control the hydraulic cylinder for vertically moving the working machine. Furthermore, the working machine installer includes a hydraulic actuator for leveling the working machine, which is also controlled by the hydraulic control valve. Another hydraulic valve for taking off power may be attached to the transmission housing 9 for a mode of driving or lifting a front or middle loaded working machine.

A clutch pedal 16 may be disposed on a step provided in a lower forward portion from the driver's seat 11 in the case of providing a later-discussed main clutch 21. A brake pedal (not shown) is provided on the step.

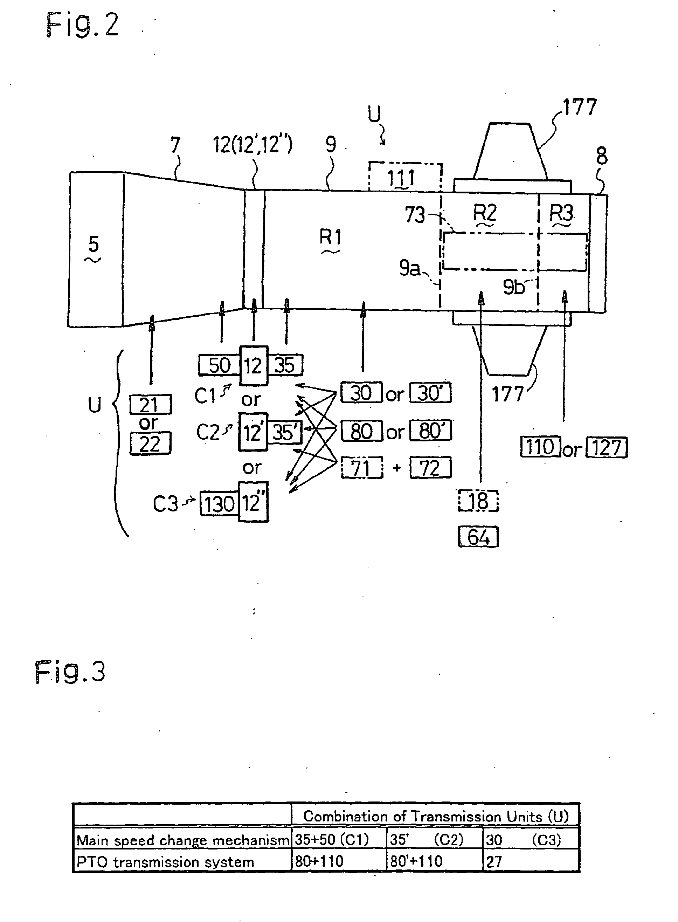

In the housing construction of the power transmission device for a vehicle of the present invention, as shown in Fig. 2 etc., the clutch housing 7 and the transmission housing 9 are formed successively in the longitudinal direction (rearward in this embodiment) from the output portion of the engine 5 (a flywheel portion thereof). Rear axle casings 177 are fixed to the left and right sides of the transmission housing 9 respectively. A rear end opening of the transmission housing 9 is blocked with a rear cover 8. The hydraulic casing 73 is fixed onto an upper rear half portion of the transmission housing 9.

While these housing members, i.e., the clutch housing 7, the transmission housing 9, the rear cover 8, the rear axle case 177, and the hydraulic case 73 are shared as common members, various modes of power transmission device can be provided by appropriately interposing a center plate 12 (12', 12") assembled with various transmission units U or no transmission unit U between the clutch housing 7 and the transmission housing 9, wherein each of the transmission units U is a unit of assembled mechanism serving as a component element of the power transmission device.

Front and rear partitions 9a and 9b are provided in the transmission housing 9 so as to divide the internal space thereof into a first room R1, a second room R2, and a third room R3 arranged in rearward order.

It is shown in Fig. 2 in which of the clutch housing 7, the first room R1, the second room R2, and the third room R3 of the transmission housing 9 each of various transmission units U is disposed.

Either the main clutch 21 or a damper 22 serves as the transmission unit U to be disposed in the clutch housing 7. A common rear-wheel differential-gear unit 64 for differentially connecting the left and right rear wheels 2 is provided in the second room R2 of the transmission housing 9 regardless of the change of mode. However, another rear-wheel differential-gear unit 64 of a different construction may be used in correspondence to a requested mode. For example, it may have a differential-locking mechanism, if necessary.

Moreover, the (rear) PTO shaft 15 is rotatably supported in the third room R3 of the transmission housing 9, and either a PTO reduction gear unit 110 or a rear PTO change gear unit 127 is attached onto the PTO shaft 15 in correspondence to a requested mode.

As shown in Figs. 2 and 3, the main speed change mechanism is attached to the center plate, which is interposed between the clutch housing 7 and the transmission housing 9 so that the transmission unit U constituting the main speed change mechanism attached to the center plate is provided in the clutch housing 7 or the first room R1 of the transmission housing 9. Especially, such an assembly unit of the center plate with the main speed change mechanism is named a center unit.

In this embodiment, three types of center units C1, C2, and C3 are prepared. The center unit C1 is an assembly of a center plate 12, to which a main speed change gear unit 35 having four speed levels and a reverser unit 50 for switching the traveling direction of the vehicle between forward and rearward directions are attached. The center unit C2 is an assembly of a center plate 12', to which a main speed change gear unit 35' having three forward speed levels and one rearward speed level is attached. The center unit C3 is an assembly of a center plate 12", to which an HST unit 130 is attached. What is necessary for a change of mode is just to interpose the chosen center unit C1, C2, or C3 between the clutch housing 7 and the transmission housing 9.

When the center unit C1 is chosen, as shown in Fig. 3, the main speed change mechanism comes to be comprised of the main speed change gear unit 35 and the reverser unit 50. By installing the center plate 12 between the clutch housing 7 and the transmission housing 9, the reverser unit 50 comes to be disposed in the clutch housing, and the main speed change gear unit 35 in the first room R1 of the transmission housing 9. When the center unit C2 is chosen and the center plate 12' is installed between the clutch housing 7 and the transmission housing 9, the main speed change gear unit 35' comes to be disposed in the first room R1 of the transmission housing 9 while no members constituting the main speed change mechanism is disposed in the clutch housing 7. When the center unit C3 is chosen and the center plate 12" is installed between the clutch housing 7 and the transmission housing 9, the HST unit 130 comes to be disposed in the clutch housing 7.

Each of the center units C1, C2 and C3 is assembled with an auxiliary speed change gear mechanism, which is either an auxiliary speed change gear unit 30 having two speed levels or an auxiliary speed change gear unit 30' having three speed levels. Therefore, by installing the center units C1, C2, and C3, either the auxiliary speed change gear unit 30 or 30' comes to be disposed in the first room R1 of the transmission housing 9. The auxiliary speed change gear unit 30 can be assembled with a later-discussed creep gear unit 57 so as to change the speed level in three levels. In each of the auxiliary speed change gear units 30 and 30', a rotary shaft onto which gears are fitted is changed in correspondence to variation of the main speed change mechanism, i.e., change of the center unit, while common gears, sliders and so on are used.

Further, each center unit is assembled with a front-wheel drive unit 75, which is a combination of a front-wheel drive clutch 72 and a front-wheel speed-increasing clutch 71. If the front-wheel speed-increasing clutch 71 is not necessary, only the front-wheel drive clutch 72 may be assembled in the center unit. By installing any of the center units, the front-wheel drive unit 75 (or only the front-wheel drive clutch 72) comes to be disposed in the first room R1 of the transmission housing 9.

Further, each of the center units C1, C2 and C3 is assembled with either a PTO speed change gear unit 80 having three speed levels in normal rotational direction and one speed level in a reversed rotational direction or a PTO speed change gear unit 80' having three speed levels in normal rotational direction, by installing any of the center units, either the PTO speed change gear unit 80 or 80' comes to be disposed in the first room R1 of the transmission housing 9. In each of the PTO speed change gear units 80 and 80', a rotary shaft onto which gears are fitted is changed in correspondence to variation of the main speed change mechanism, i.e., change of the center unit, while common gears, sliders and so on are used.

As shown in Fig. 3, in the PTO transmission system, the combination of the PTO speed change gear unit 80 or 80' and the PTO reduction gear unit 110 provided in the third room R3 as mentioned above may be replaced with a rear PTO speed change gear unit 127 which is provided in the third room R3. When using the rear PTO change gear unit 127, neither the PTO speed change gear unit 80 nor 80' is assembled in each of the center units C1, C2, and C3 so that no PTO transmission mechanism is provided in the first room R1.

If necessary, a PTO clutch unit 18, serving as a transmission unit U which is not previously attached to the center unit, is provided in the second room R2 of the transmission housing 9. As discussed later, the PTO clutch unit 18 is constructed as a combination of a PTO clutch and a PTO brake. A mid PTO gear unit 111 can be provided on a side portion of the transmission housing 9. Especially, the mid PTO gear unit 111 is provided as a combination with a later-discussed rear PTO change gear unit 127 if the rear PTO change gear unit 127 is provided.

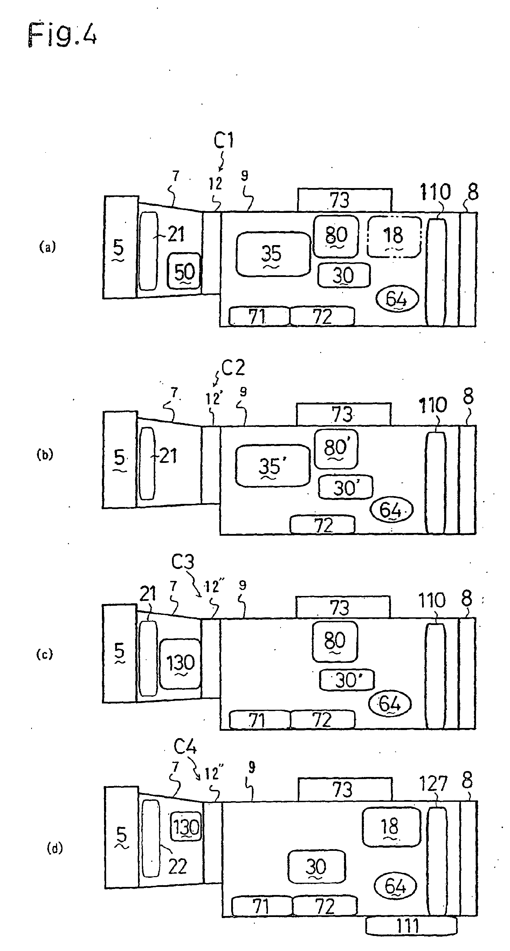

Some power transmission devices of different modes are shown in Figs. 4(a)-4(d) and Figs. 5-9. They are constructed by selecting one of the center units C1-C3 as the assemblies of the transmission units U or/and by selecting the transmission unit or units U other than the center unit, and by arranging the selected center unit and/or transmission unit (units) U in the clutch housing 7 and the transmission housing 9.

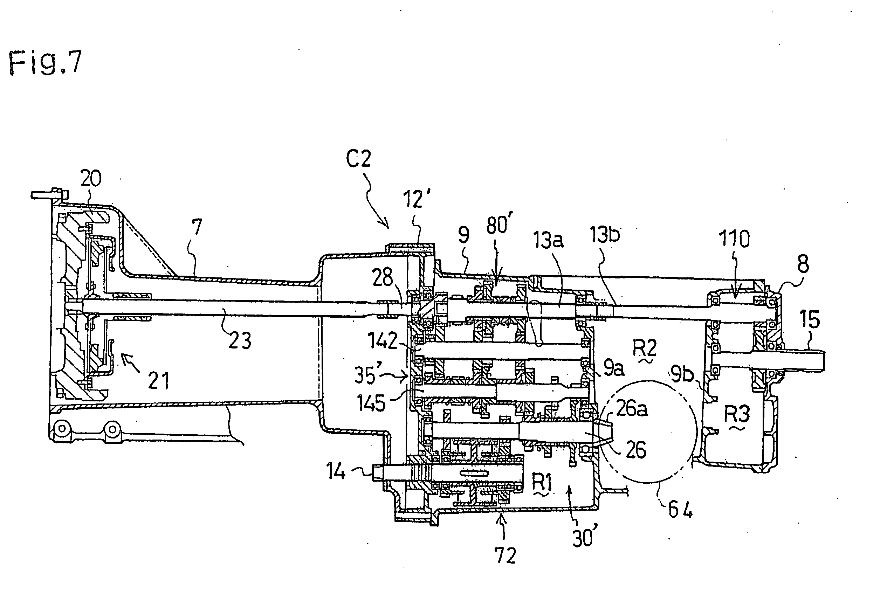

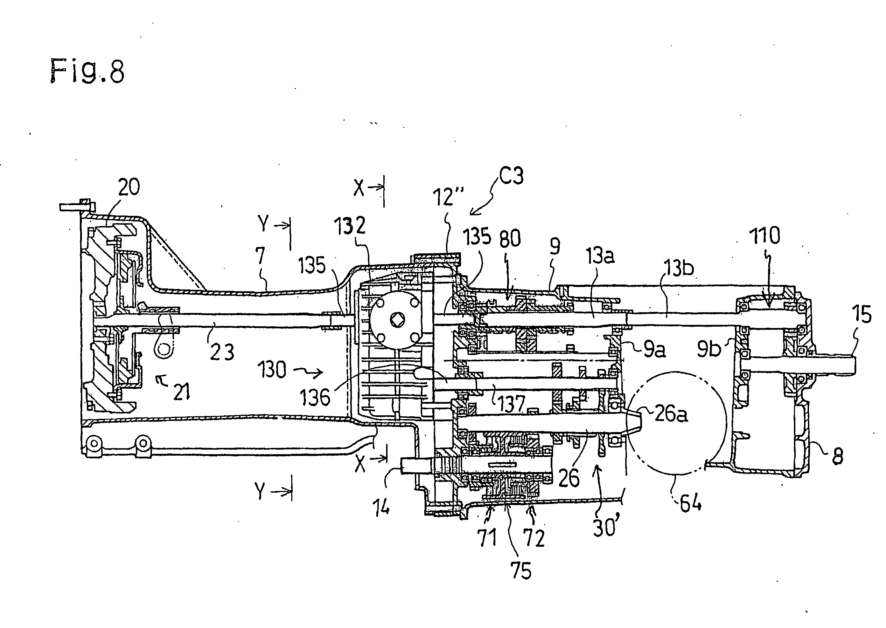

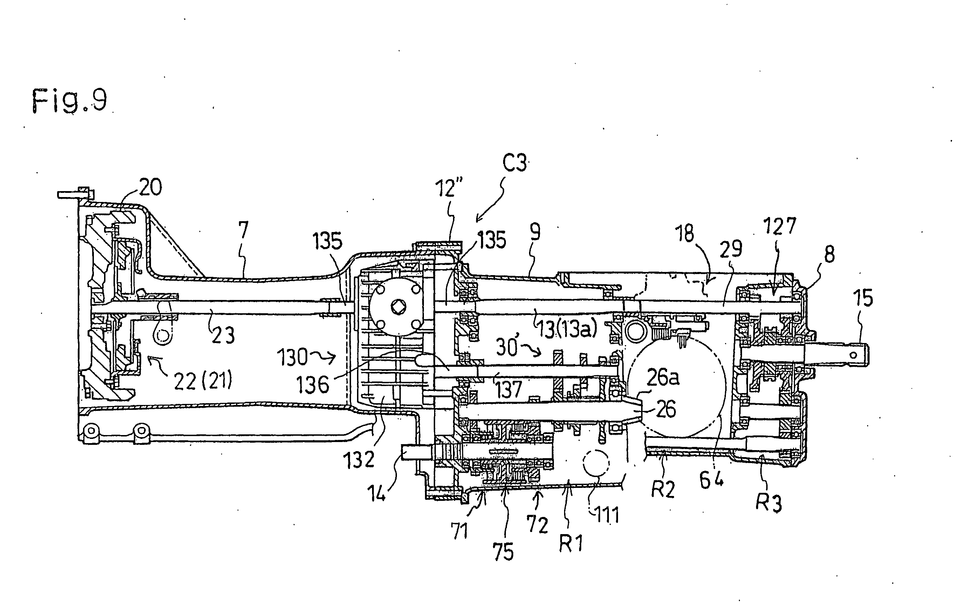

First, in the power transmission device shown in Fig. 4(a) and Figs. 5-6, the center unit C1 is installed so that the main speed change mechanism is constructed by the main speed change gear unit 35 and the reverser unit 50. In the power transmission device shown in Fig. 4(b) and Fig. 7, the center unit C2 is installed so that the main speed change mechanism is constructed by the main speed change gear unit 35' which has a reverser mechanism (instead of the steering reverser unit 50). In each of the power transmission device shown in Fig. 4(c) and Fig. 8 and the power transmission device shown in Fig. 4(d) and Fig. 9, the center unit C3 is installed so that the main speed change mechanism is constructed by the HST unit 130.

As shown in Figs. 4(a)-4(d) and Figs. 5-9, either the auxiliary speed change gear unit 30 or 30' is used as the auxiliary speed change mechanism. Each of the auxiliary speed change gear unit 30 and 30' is attached to the center plate so as to be provided in the first room R1 of the transmission housing 9, and can be appropriately exchanged for the other auxiliary speed change gear unit 30' or 30. In each of the shown devices, the front-wheel drive clutch 72 is indispensable for the front-wheel drive system, and attached to the center plate so as to be provided in the first room R1 of the transmission housing 9. The front-wheel speed-increasing clutch 71 is used optionally, and may be removed as shown in Fig. 4(b) and 7.

In each of the power transmission devices shown in Fig. 4(a)-4(c) and Figs. 5-8, the PTO transmission system is a combination of either the PTO speed change gear unit 80 or 80', which is assembled in the center unit and provided in the first room R1 of the transmission housing 9, and the PTO reduction gear unit 110 which is provided in the third room R3 of the transmission housing 9. The PTO change gear units 80 and 80' can be appropriately interchanged.

The power transmission device shown in Fig. 4(d) and Fig. 9 includes the PTO transmission system of the power transmission device shown in Fig. 4(c) and Fig. 8, which is so modified as to also drive the mid-mount working machine. That is to say, while the PTO transmission mechanism is not provided in the first room R1 of the transmission housing 9, the rear PTO change gear unit 127 is provided in the third room R3, and the mid PTO gear unit 111 is attached to the transmission housing 9.

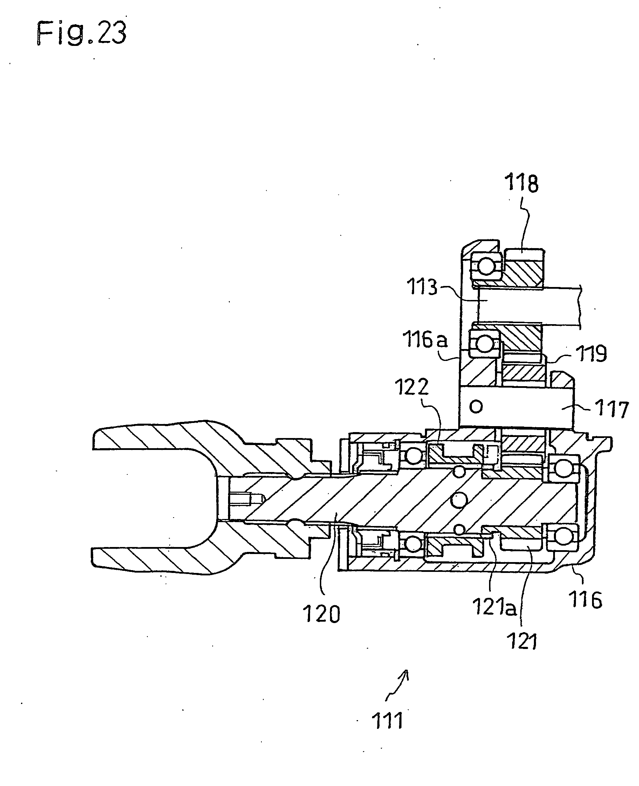

The mode of PTO transmission system shown in Fig. 4(d) and Fig. 9, which has the main PTO (rear PTO) transmission system and the mid PTO transmission system, may be also provided in each of the power transmission devices shown in Figs. 4(a) and 4(b) and Figs. 5-7 in which the mechanical (gear type) main speed change mechanism is installed by using the center unit C1 or C2. Fig. 23 illustrates a state where the mid PTO gear unit 111 is installed in the transmission housing 9 in which the center unit C1 is installed.

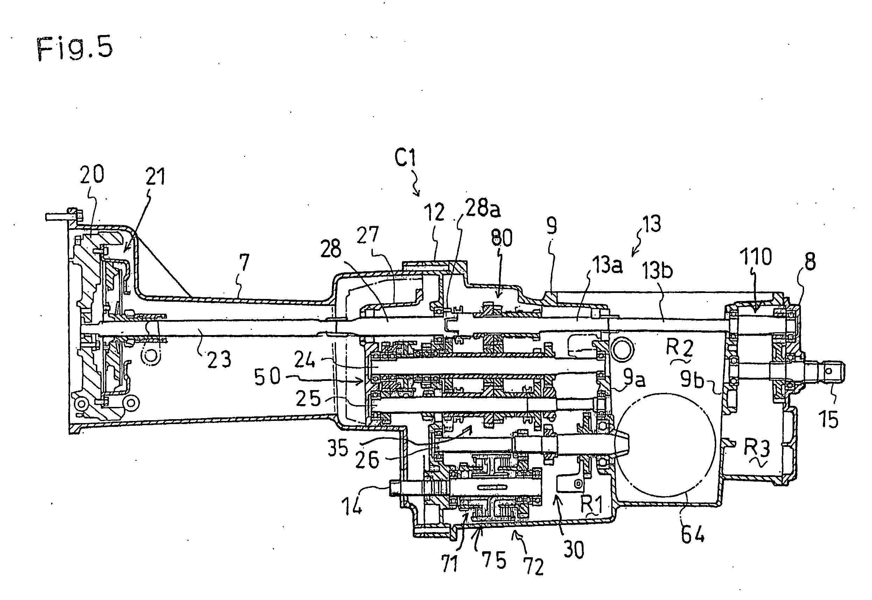

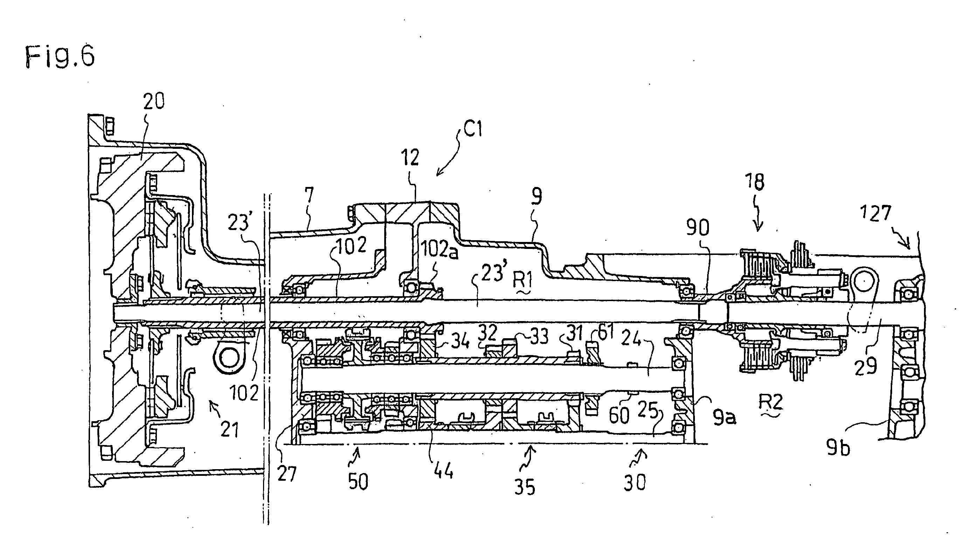

As the power transmission devices in the mode shown in Fig. 4(a), a type without the PTO clutch unit 18 shown in Fig. 5 and a type with the PTO clutch unit 18 shown in Fig. 6 are disclosed. Also in the power transmission device shown in Fig. 4(b) and 4(c), the PTO clutch unit 18 may be provided so that the clutch of the PTO transmission system is independent of the clutch of the traveling transmission system. In the power transmission device shown in Fig. 4(d), the PTO clutch unit 18 is provided as the PTO transmission system, and the HST unit 130 of the traveling transmission system can be set in neutral, whereby the damper 22 replaces the main clutch 21.

The center units C1-C3 and the transmission unit U are rearranged in this way, thereby ensuring that the power transmission devices of various modes shown in Fig. 4(a)-4(d) or not shown can be constructed while the clutch housing 7, the transmission housing 9, etc. are common members.

Description will be given on a concrete construction of each transmission unit U and a concrete construction of each of various transmission mechanisms such as the center units C1-C3 etc. which are constructed by combinations of some transmission units U, in the situation that the majority of them are installed in the power transmission device.

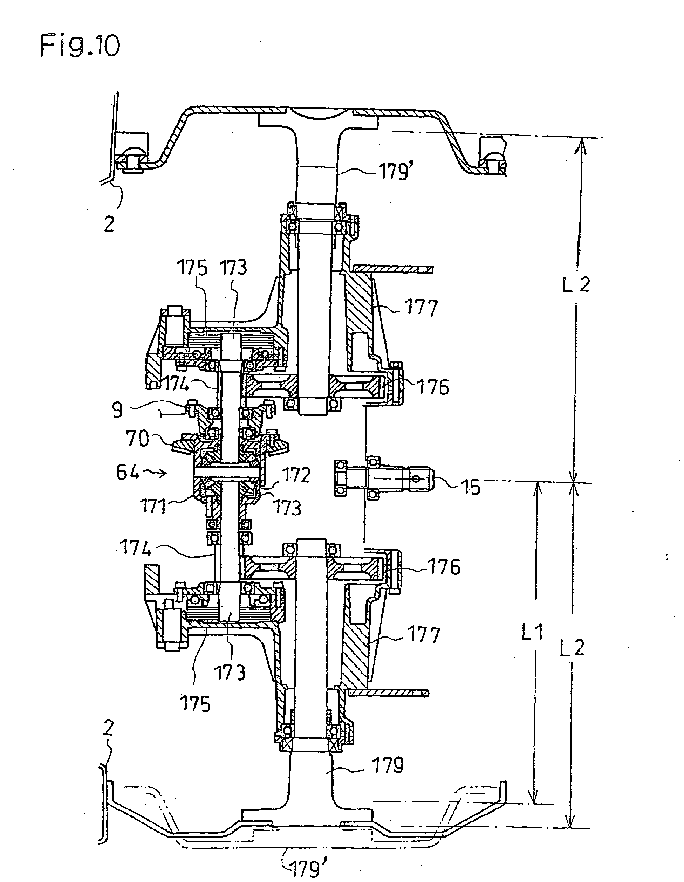

First, the common rear-wheel differential gear unit 64 shared among all the modes of power transmission device will be described in accordance with Figs. 10 etc. As shown in Figs. 5 etc., the rear-wheel differential gear unit 64 is disposed in the second room R2 of the transmission housing 9. A ring gear 70 serving as an input gear of the rear-wheel differential gear unit 64 meshes with a pinion 26a formed on a rear end of an auxiliary speed change shaft 26 serving as a final output member of either the later-detailed auxiliary speed change gear unit 30 or 30' in the traveling transmission system.

Referring to Fig. 10, in the rear-wheel differential gear unit 64, the ring gear 70 is fixed on an outer periphery of a differential gear casing -gear 171, in which a pair of differential pinions 171 and a pair of differential side gears 172 are arranged so that each differential pinion 171 meshes with both the differential side gears 172. A pair of left and right differential yoke shafts 173 are provided on one ends thereof with the respective differential side gears 172. Each differential yoke shaft 173 is fixedly provided on the other end portion thereof with a diametrically small gear 174 and multi brake discs 175 which is more distal than the gear 174. As shown in Fig. 2, the left and right rear axle casings 177 are fixed on the respective left and right sides of the transmission housing 9 so as to laterally project. Each of the differential yoke shafts 173 is rotatably supported by the transmission housing 9 and each of the rear axle casings 177.

The multi brake discs 175 fitted onto each differential yoke shaft 173 are alternately arranged with friction discs fitted to each rear axle casing 177. A cam is actuated by depressing the brake pedal so as to press the brake discs 175 against the friction discs, thereby braking each of the differential yoke shafts 173.

In each of the rear axle casings 177 is rotatably laid a rear-wheel axle 179 in parallel to each differential yoke shaft 173. Each of the rear-wheel axles 179 is fixedly provided on a proximal end thereof with a diametrically large gear 176, which meshes with the diametrically small gear 174 so as to constitute a final reduction gear train. Each of the rear-wheel axles 179 is fixedly provided on a distal end thereof with the rear wheel 2.

In this way, power received by the rear-wheel differential gear unit 64 is transmitted through the left and right differential yoke shafts 173 and the reduction gears 174 and 176 to the left and right rear-wheel axles 179 so as to drive the left and right rear wheels 2.

As mentioned above, the rear axle casings 177 are common members as well as the clutch housing 7 and the transmission housing 7, which are shared among later-detailed modes of power transmission devices. The rear-wheel axles 179 of lengths L1 are usually used, however, rear-wheel axles 179' (having lengths L2 larger than lengths L1), one of which is shown as an upper axle in Fig. 10, are attached to the power transmission device of the type, as shown in Figs. 4(d) and 9, having the mid PTO transmission system for driving the mid-mount working machine. Wide tires are attached to the respective rear-wheel axles 179' so as to stabilize traveling of the vehicle.

Description will now be given on the main clutch 21 disposed in the clutch housing 7.

As shown in Figs. 5 etc., the common main clutch 21 of a friction type is shared between the traveling transmission system and the PTO transmission system. The main clutch 21 is disposed in a front portion of the clutch housing 7 and interlockingly connected to the clutch pedal 16 shown in Fig. 1 so that the main clutch 21 is disengaged by depression of the clutch pedal 16. A clutch shaft 23 is a common input shaft of the traveling transmission system and the PTO transmission system and is selectively connected or separated with and from a flywheel 20 fixed on the crankshaft of the engine 5 through the main clutch 21.

As shown in Figs. 5 etc., the clutch shaft 23 is extended rearward from the flywheel 20 and passed through the clutch housing 7. The clutch shaft 23 is fixedly connected to an front end of either an input shaft 28 or 135 so as to be integrated with the input shaft 28. The input shaft 28 is journalled by either the center plate 12 of the center unit C1 or the center plate 12' of the center unit C2. The input shaft 135 is journalled by the center plate 12" of the center unit C3. Each of the input shafts 28 and 135 is a common input shaft shared between the traveling transmission system and the PTO transmission system.

In such a mode of power transmission device as shown in Figs. 4(d) and 9, wherein the HST unit 139 serves as the main speed change mechanism of the traveling transmission system and the PTO clutch unit 18 serves as the PTO transmission system, the damper 22 is provided so as to fit the clutch shaft 23 to the flywheel 20 in a vibratory-isolating manner instead of the main clutch 21, because the HST unit 130 can be set in neutral so as to shut down power transmission to the downstream traveling transmission system and the PTO clutch in the PTO clutch unit 18 can be disengaged so as to shut down power transmission to the rear PTO shaft 15 (and the mid PTO shaft 120).

In the embodiment shown in Fig. 6, a PTO transmission shaft 23' replacing the PTO shaft 23 is fitted at a front end thereof to the flywheel 20, and the PTO clutch unit 18 is provided in the transmission housing 9. The main clutch 21 is interposed between the flywheel 20 and a hollow input shaft 102 freely rotatably provided on the PTO transmission shaft 23' so as to serve as a clutch for only the traveling transmission system. This structure will be detailed in later description of the PTO transmission system.

In the state where the clutch shaft 23 and either the main clutch 21 or the damper 22 are arranged in the clutch housing 7 continuously connected to the engine 5, by attaching and fixing the center plate 12 or 12' (12") journalling the input shaft 28 (135) to a rear and of the clutch housing 7, the input shaft 28 (135) naturally comes to be arranged coaxially with the clutch shaft 23, thereby being connected to the clutch shaft 23 easily.

In this way, each of the center plates 12, 12' and 12" is connected at the front end surface thereof to the rear end surface of the clutch housing 7, and then, it is connected at the rear end surface thereof to the front end surface of the transmission housing 9, thereby being fixedly sandwiched between the clutch housing 7 and the transmission housing 9 as mentioned above.

For example, with respect to the center unit C1 which is used for the mode shown in Figs. 4(a) and 5, by arranging the center plate 12 in the above-mentioned manner, the reverser unit 50 comes into the clutch housing 7, and the main speed change gear unit 35, the auxiliary speed change gear unit 30, the PTO speed change gear unit 80 and the front-wheel driving unit 75, which are assembled with the center plate 12 together, come into the transmission housing 9.

A counter shaft 24, a main speed change shaft 25, an auxiliary speed change shaft 26 and a front-wheel driving shaft 14 through respective bearings are previously rotatably supported through respective bearings as well as the input shaft 28 by the center plate 12. A PTO speed change shaft 13 is coaxially connected to the input shaft 28. Various gears are provided on this group of rotary shafts so as to constitute the main speed change gear unit 35, the reverser unit 50, the auxiliary speed change gear unit 30, the front-wheel driving unit 75 and the PTO speed change gear unit 80.

When the center plate 12 of the center unit C1 assembled with various transmission units U is fixed to the rear end of the clutch housing 7, the reverser unit 50 is naturally arranged in the clutch housing 7, the front-wheel driving shaft 14 is joumalled by the lower expanded portion of the clutch housing 7 so as to project forward, and the input shaft 28 is connected the clutch shaft 23 as mentioned above.

The center plate 12 fixed to the rear end of the clutch housing 7 in the above-mentioned manner is provided at the rear portion thereof with the PTO speed change gear unit 18, the main speed change gear unit 35, the auxiliary speed change gear unit 30, and the front-wheel driving unit 75. The transmission housing 9 is arranged so as to cover the gear units 18, 35, 30 and the driving unit 75. The, the counter shaft 24, the main speed change shaft 25 and the auxiliary speed change shaft 26 are journalled at rear ends thereof by the front partition wall 9a of the transmission housing 9. Then, the front end surface of the transmission housing 9 is fixed to the rear end surface of the center plate 12, thereby finishing arranging the transmission units U in the first room R1 of the transmission housing 9.

Description will now be given on traveling transmission systems of respective modes of power transmission device.

The center unit C1 is used for the power transmission device shown in Figs. 4(a) and 5 so that the transmission units U assembled therein, i.e., the main speed change gear unit 35, the reverser unit 50 and the auxiliary speed change gear unit 30 are properly placed in the clutch housing 7 and the transmission housing 9 so as to constitute a traveling transmission system which transmits power from the main clutch 21 in the clutch housing 7 to the rear-wheel differential gear unit 64 through the main speed change gear unit 35, the reverser unit 50 and the auxiliary speed change gear unit 30. Furthermore, in the center unit C1 is assembled the front-wheel driving unit 75 which picks out power to the front-wheel driving shaft 14.

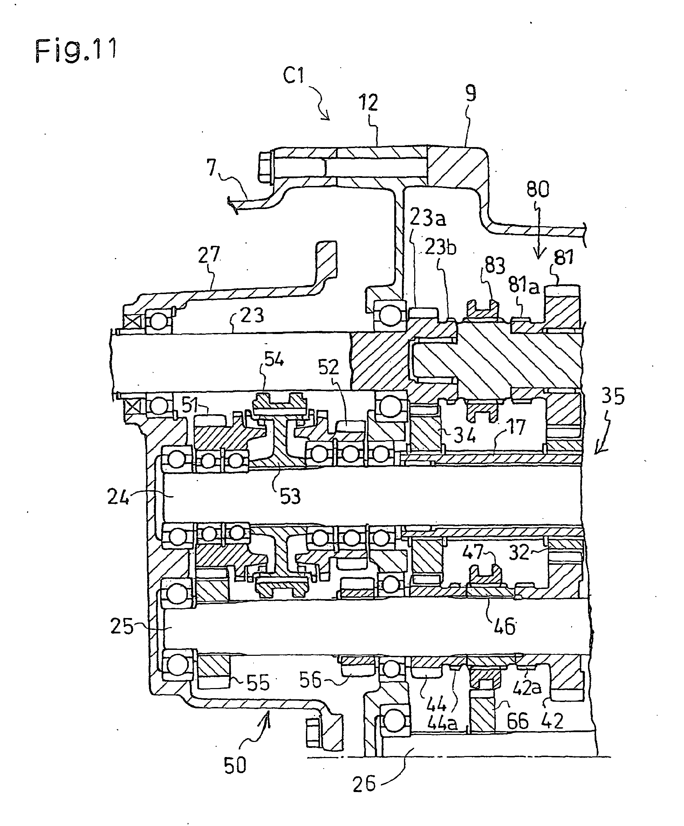

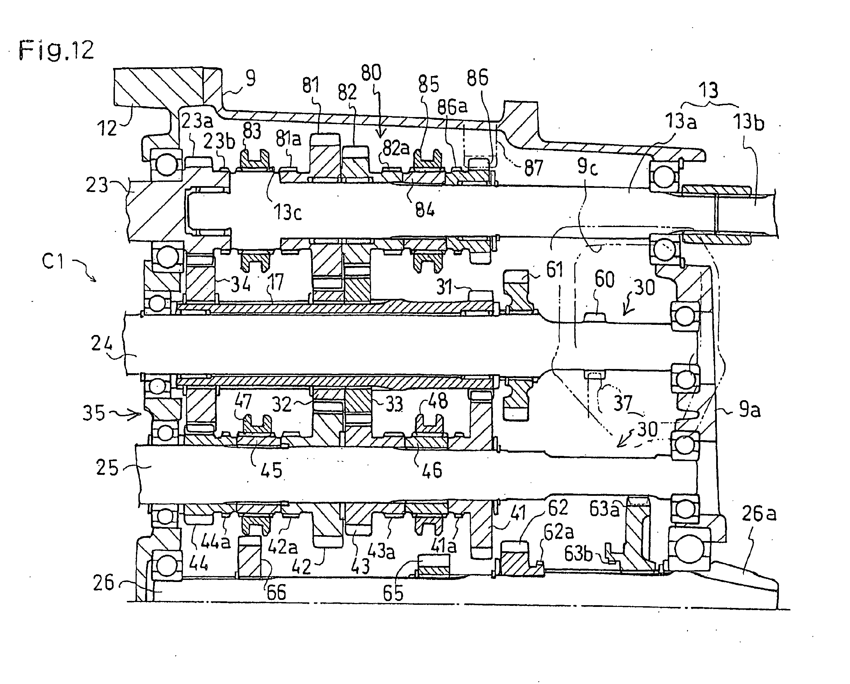

Description will now be given on the main speed change gear unit 35, the reverser unit 50 and the auxiliary speed change gear unit 30 in accordance with Figs. 11, 12 etc.

An input gear 28a is formed on a rear end of the input shaft 28. The hollow shaft 17 relatively rotatably provided on the counter shaft 24 is fixedly provided on a front end portion thereof with a fourth speed counter gear 34 meshing with the input gear 28b. On the hollow shaft 17 are fixed a second speed counter gear 32, a third speed counter gear 33 and a first speed counter gear 31 in a rearward order. The fourth speed counter gear 34, the second speed counter gear 32, the third speed counter gear 33 and the first speed counter gear 31 constantly mesh with respective gears freely provided on the main speed change shaft 25, i.e., a fourth speed gear 44, a second speed gear 42, a third speed gear 43 and a first speed gear 41.

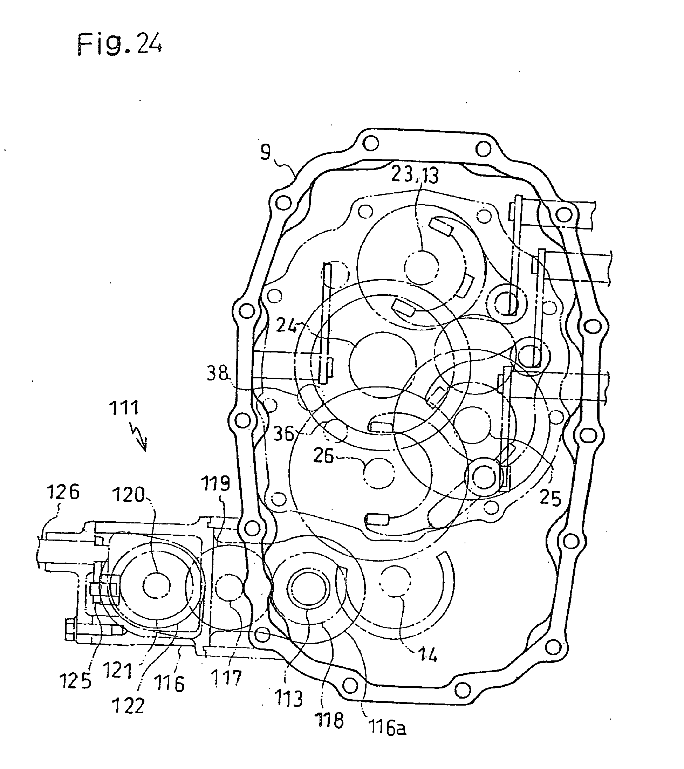

On the main speed change shaft 25 is fixed a splined collar 45 between the second and third speed gears 42 and 44, and a slider 45 is fitted on the splined collar 45. On the other hand, between the first and third speed gears 41 and 43 is fixed a splined collar 46 on which a slider 48 is fitted. The sliders 47 and 48 are connected to the main speed change lever 3 through a shift fork, a shifter etc. as shown in Fig. 24 so that they are slid on the respective spline collars 45 and 46 by operating the main speed change lever 3.

To establish the first main speed level, the slider 48 is slid and fittingly provided across the splined collar 46 and a small gear 41a attached on the first gear 41 so as to rotate the main speed change shaft 25 in the first speed level. For the second main speed level, the slider 48 is located across the splined collar 45 and a small gear 42a of the second speed gear 42. For the third main speed level, the slider 48 is located across the splined collar 46 and a small gear 43a of the third gear 43. For the fourth speed level, the slider 47 is located across the splined collar 45 and a small gear 44a of the fourth speed gear 44. Consequently, the main speed change gear unit 35 is constructed so as to transmit power from the input shaft 28 to the main speed change shaft 25 through the gears on the hollow shaft 17.

As shown in Fig. 11, the counter shaft 24 and the main speed change shaft 25 penetrate the center plate 12 and project forward so as to constitute the reverser unit 50. The counter shaft 24 and the main speed change shaft 25 are rotatably supported at front ends thereof through respective bearings by a cover 27 fixed on the front portion of the center plate 12 so as to construct the reverser unit 50 in the cover 27. Therefore, by providing the center plate 12 into the predetermined place, the reverser unit 50 assembled with the cover 27 comes into the clutch housing 7.

The reverser unit 50 comprises a forward traveling follower gear 51 and a rearward traveling follower gear 52 relatively rotatably provided on a front portion of the counter shaft 24 through bearings. The forward traveling follower gear 51 constantly meshes with the forward traveling drive gear 55 fixed on the main speed change shaft 25 so as to constitute a forward traveling gear train. The rearward traveling follower gear 52 constantly meshes with the forward traveling drive gear 55 fixed on the main speed change shaft 25 through an idler (reversing) gear (not shown) so as to constitute a rearward traveling gear train.

A hub 53 is fixed on the counter shaft 24 between the forward and rearward traveling follower gears 51 and 52 so as to constitute a synchro-mesh gear mechanism. In this regard, a synchronizer sleeve 54 is slidably provided on the hub 53 and operationally connected to a reverser lever provided in a cab of the vehicle as mentioned above through a shift fork, a link or so on. By operating the reverser lever, the synchronizer sleeve 54 slides and meshes with a small gear attached on either the forward or rearward traveling follower gear 51 or 52 so as to change the traveling direction of the vehicle between forward and rearward directions. Therefore, one of the forward and rearward traveling gear trains in the reverser unit 50 selectively transmits power from the main speed change shaft 25 to the counter shaft 24. However, the reverser lever is located at its neutral position, the synchronizer sleeve 54 meshes with neither the forward traveling follower gear 51 nor the rearward traveling follower gear 52, so that power of engine 5 is transmitted to neither the forward traveling gear train nor the rearward traveling gear train, whereby the counter shaft 24 is not driven:

In the center unit C1 shown in Fig. 12, the auxiliary speed change gear unit 30 is constructed between the counter shaft 24 and the auxiliary speed change shaft 26.

Counter gears 60 and 61 are fixed on the counter shaft 24 behind the hollow shaft 17, or integrally formed on the counter shaft 24. On the other hand, a high speed gear 62 is freely rotatably provided on the auxiliary speed change shaft 26 and constantly meshes with the counter gear 61. A slide gear 63 is spline-fitted on the auxiliary speed change shaft 26, and operationally connected through a shifter or so on to an auxiliary speed change lever provided in the cab of the vehicle.

The slide gear 63 is provided with a diametrically large gear 63a and an inner peripheral gear 63b. By operating the auxiliary speed change lever to slide the slide gear 63, the large gear 63a meshes with the counter gear 60 so as to rotate the auxiliary speed change shaft 26 at low speed, or the inner peripheral gear 63b meshes with a small gear 62a of the high speed gear 62 so as to rotate the auxiliary speed change shaft 26 at high speed.

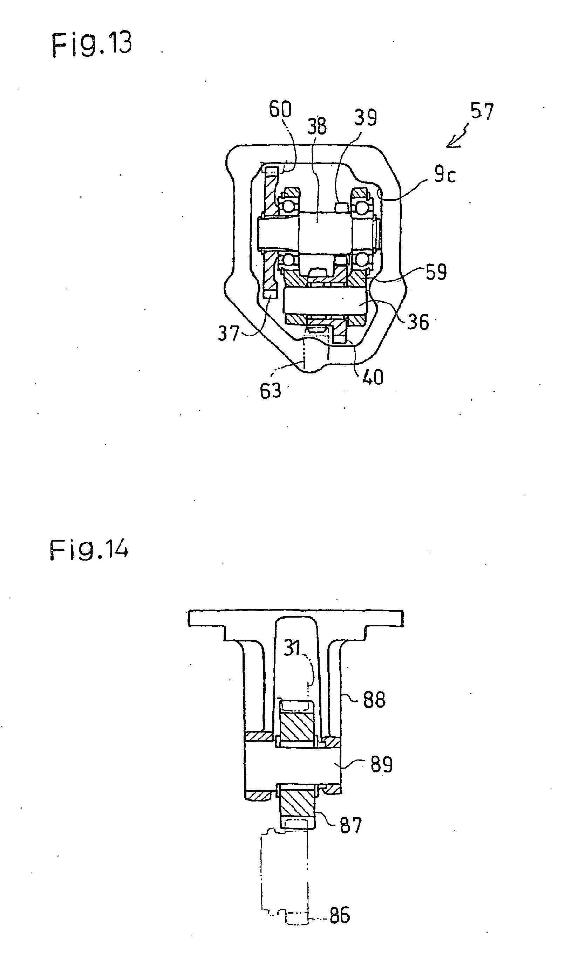

Incidentally, a creep gear unit 57 as shown in Fig. 13 may be provided in the transmission housing 9 and assembled with the auxiliary speed change gear unit 30 therein so as to add a creep speed level as one of the auxiliary speed levels.

In the creep gear unit 57, a supporter 59 rotatably supports a horizontal creep speed change shaft 36, which is also shown in Fig. 24, and a horizontal counter shaft 38. Creep reduction gears 37 and 39, which are also shown in Fig. 12, are fixed on the counter shaft 38. The gear 39 constantly meshes with one of double gears 40 freely rotatably provided on the creep speed change shaft 36.

The creep gear unit 57 is inserted into the transmission housing 9 through a side opening 9c of the transmission housing 9, as show in Fig. 12, and the supporter 59 is fixed to the transmission housing 9, whereby the creep gear unit 57 is settled in the transmission housing 9. The gear 37 constantly meshes with the counter gear 60 of the auxiliary speed change gear unit 30. The other of the double gears 40 is allowed to mesh with the diametrically large gear 63a of the slide gear 63.

Due to this construction, when the slide gear 63 meshes with the gears 40, engine power is transmitted from the counter shaft 24 through the counter gear 60, the creep reduction gears 37 and 39, and the slide gear 63 to the auxiliary speed change shaft 26, thereby creeping the vehicle (i.e., making the vehicle travel at extremely low speed.

In this way, the traveling transmission system including the center unit C1 is so constructed as to transmit power from the input shaft 28 to the auxiliary speed change shaft 26 through the hollow shaft 17, the main speed change shaft 25 and the counter shaft 24. The rotational force of the auxiliary speed change shaft 26 is distributively transmitted to the rear-wheel differential gear unit 64 through the pinion 26a, and to the front-wheel driving shaft 14 through a front-wheel drive unit 75.

The front-wheel drive unit 75 will be detailed later.

Description will now be given on the traveling transmission system using the center unit C2, comprising the main speed change gear unit 35' and the auxiliary speed change gear unit 30' shown in Figs. 4(b), 7 and 18.

When the main speed gear unit 35' having a gear train for rearward traveling of the vehicle is used, a kind of the transmission unit U such as the reverser unit 50 disposed in the clutch housing 7 is unnecessary. Therefore, the center unit C2 uses the center plate 12', which replaces the center plate 12 supporting the counter shaft 24 and the main speed change shaft 25 therethrough lengthwise.

Similarly with the center plate 12, the center plate 12' journals the input shaft 28, which penetrates the center plate 12' lengthwise to be connected to the clutch shaft 23. Additionally, the center plate 12' journals a front end portion of a counter shaft 142 replacing the counter shaft 24, and a front end portion of a main speed change shaft 145 replacing the main speed change shaft 25.

The input gear 28a on the rear end of the input shaft 28 meshes with a counter gear 143 fixed on the counter shaft 142 so as to transmit the rotational force of the input shaft 28 to the counter shaft 142. The counter shaft 142 serves as an integral combination of the counter shaft 24 and the hollow shaft 17. on the counter shaft 142 are fixedly arranged a rearward traveling counter gear 144, a counter gear 143, a third speed counter gear 153, a first speed counter gear 151 and a second speed 152 in a rearward order. On the main speed change shaft 145 are freely rotatably provided a third speed gear 156, a first speed gear 154 and a second speed gear 155 so as to constantly mesh with the third speed counter gear 153, the first speed counter gear 151 and the second speed counter gear 152, respectively. Additionally, on the main speed change shaft 145 is freely rotatably provided a rearward traveling gear 146, which meshes with the backward traveling counter gear 144 through an idling gear (not shown).

On the main shaft 145 between the first and second speed gears 154 and 155 is fixed a splined collar, on which a slider 157 is spline-fitted. The slider 157 is allowed to slide on the main speed change shaft 145 so as to selectively mesh with one of small gears 154a and 155a which are formed on the respective first and second speed gears 154 and 155, thereby establishing either a first or second speed level of forward traveling. Also, on the main shaft 145 between the third speed gear 156 and the rearward traveling gear 146 is fixed a splined collar, on which a slider 158 is spline-fitted. The slider 158 is also allowed to slide on the main speed change shaft 145 so as to selectively mesh with one of small gears 156a and 146a which are formed on the respective gears 156 and 146, thereby establishing either a first speed level of forward traveling or a speed level of rearward traveling.

In the center unit C2 used for the power transmission device shown in Figs. 4(b) and 7, an auxiliary speed change gear unit 30' having three speed levels is constructed between the main speed change shaft 145 and the auxiliary speed change shaft 26.

On a rear portion of the main speed change shaft 145 is fixed gears 160, 161 and 162. On the auxiliary speed change shaft 26 is relatively rotatably provided gears 163 and 164. The gears 160 and 163 constantly mesh with each other so as to constitute a high speed gear train. The gears 162 and 164 constantly mesh with each other so as to constitute a low speed gear train.

On the auxiliary speed change shaft 26 between the gears 163 and 164 is axially slidably spline-fitted a slide gear 165 so as to mesh with one selected from a small gear 163a provided on the gear 163, a small gear 164a provided on the gear 164 and the gear 161. When the slide gear 165 meshes with the gear 161, a mid speed level gear train is established so as to transmit the rotational force of the main speed change shaft 145 to the auxiliary speed change shaft 26. The rotational force of the main speed change shaft 145 is alternatively transmitted to the auxiliary speed change shaft 26 through a high speed gear train including the gears 160 and 163 by meshing the slide gear 165 with the small gear 163a, or through a low speed gear train including the gears 160 and 164 by meshing the slide gear 165 with the small gear 164a.

The auxiliary speed change gear unit 30' may be replaced with the above-mentioned auxiliary speed change gear unit 30. In this case, it is required for the inner arrangement of the center unit C1 that the gears 60 and 61 are not fixed on the counter shaft 24 but fixed on the main speed change shaft 145, and the gears 62 and 63 are provided on the auxiliary speed change shaft 26 and mesh with the respective gears 60 and 61.

Further, if in the above-mentioned center unit C1 is arranged the auxiliary speed change unit 30' replacing the auxiliary speed change unit 30, the gears 160, 161 and 162 are fixed on the counter shaft 24, and the gears 163, 164 and 165 are provided on the auxiliary speed change shaft 23.

Description will now be given on the HST unit 130 using the center unit C3, serving as the main speed change mechanism in the traveling transmission system shown in Figs. 4(c), 8, 19 and 20.

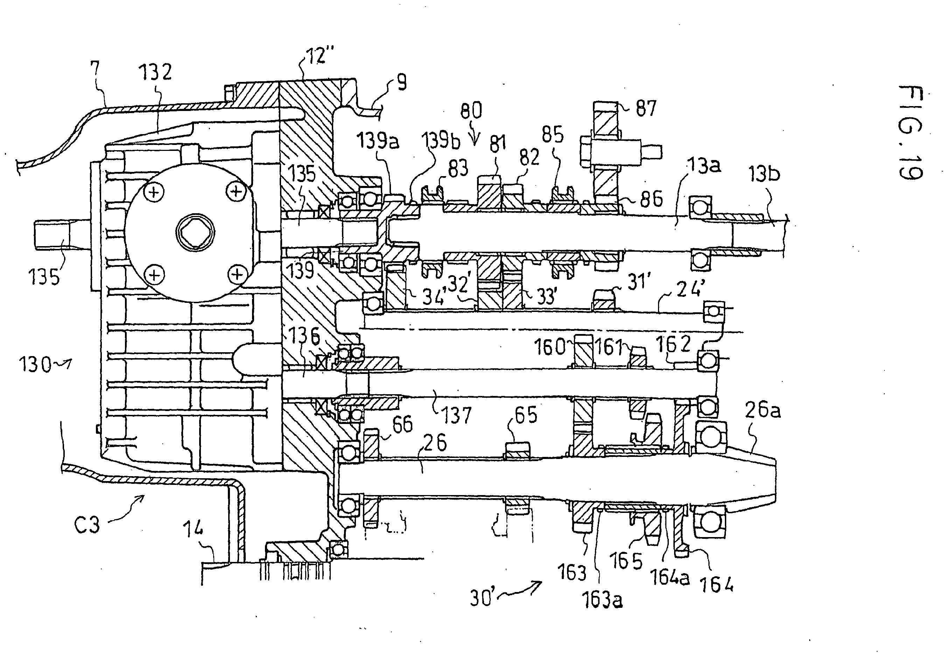

The center plate 12" of the center unit C3 is so constructed as to journal an input shaft 135, an HST output shaft 136, a counter shaft 24", the auxiliary speed change shaft 26, and the front-wheel driving shaft 14. As shown in Fig. 19, an HST housing 132 is fixed onto a front surface of the center plate 12" so as to support the cantilever HST unit 130. The center plate 12" is formed therein with oil passages so as to serve as a center section of the HST unit 130, thereby saving costs.

The HST unit 130 is constituted by an axial piston variable displacement hydraulic pump and an axial piston fixed displacement hydraulic motor which are arranged in parallel in the HST housing 132 and fluidly connected to each other. Therefore, the input shaft 135 is placed on the axis of the hydraulic pump, the HST output shaft 136 on the axis of the hydraulic motor. The input shaft 135, serving as a pump shaft of the hydraulic pump, penetrates the HST unit 130 lengthwise so as to be connected at a front end thereof to the clutch shaft 23. The HST output shaft 136, serving as a motor shaft of the hydraulic motor, projects rearward and penetrates the center plate 12" so as to be fixedly connected to a coaxial auxiliary speed change drive shaft 137.

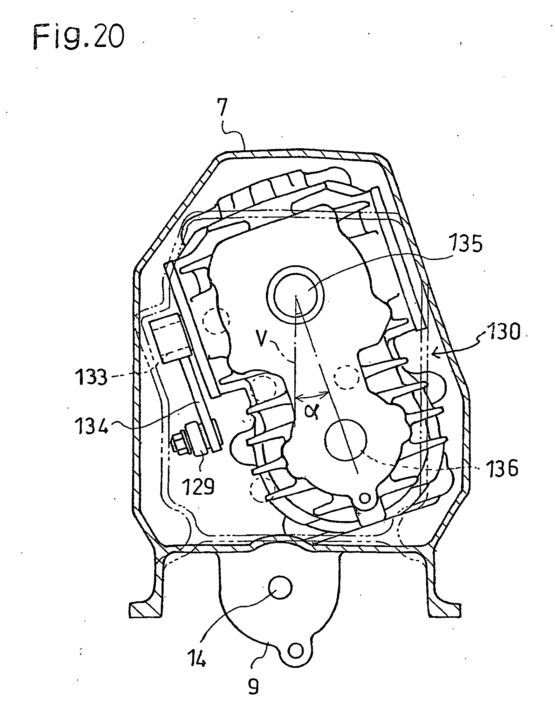

When the center unit C3 is properly placed, the hydraulic pump and the hydraulic motor are aligned in the substantially vertical direction in the HST unit 130, however, they are laterally offset from each other to some degree. As shown in Fig. 20, a straight line connecting the axis of the input shaft 135 (the pump shaft) to the axis of the HST output shaft 136 (the motor shaft) is laterally inclined from a vertical line V at an angle α. Therefore, the bottom position of the HST unit 130 becomes higher than the bottom of the conventional HST having vertically arranged hydraulic pump and motor, thereby raising the front-wheel driving shaft 14 below the HST unit 130 and ensuring a high ground clearance of the vehicle.

Moreover, this slant arrangement of the HST unit 130 ensures a space between one lower lateral side of the HST housing 132 and an inner surface of the clutch housing 7 as illustrated in solid lines in Fig. 20 as a cross sectional view taken on X-X line of Fig. 8. In this space are arranged a speed control shaft 133, which projects downwardly slantwise from the HST housing 132, and a speed change arm 134. The speed control shaft 133 is rotated so as to change the rotational speed and direction of the HST output shaft 136 so as to tilt a movable swash plate of the hydraulic pump (or change the capacity of the hydraulic pump). The speed change arm 134 is fixed at a base end portion thereof to the speed control shaft 133, and pivotally connected at an utmost end portion thereof to a rear end of a connection rod 129. The connection rod 129 is extended forward in the clutch housing 7 so as to be connected to the above-mentioned main speed change lever 3 through the front side surface of the clutch housing 7.

Incidentally, phantom lines in Fig. 20 are drawn as a cross sectional view taken on Y-Y line of Fig. 8, which is a sectional view of a portion of the clutch housing 7 ahead of its portion incorporating the HST unit 130, assisting it to be understood that in the clutch housing 7 is ensured an enough space for arrangement of the connection rod 129 extended forward from the speed change arm 134.

In this way, according to this embodiment, the center unit C3 assembled therein with the HST unit 130 has the noisy speed control shaft 133 and the speed change arm 134 enclosed by the clutch housing 7. Furthermore, the connection rod 129 is extended from the speed change arm 134 so as to be connected to the main speed change lever 3 between inside and outside through the portion of the clutch housing 7 having a distance from the HST unit 130, thereby reducing noise of the HST in actuation leaking outward from the clutch housing 7.

Moreover, both the speed change arm 134 and the connection rod 129 are disposed in the clutch housing 7 so as to be protected from mud or dust outside the clutch housing 7, whereby these link members are prevented from unstably moving. Furthermore, a slack portion provided in the conventional linkage is unnecessary to be arranged between the main speed change lever 3 and the speed control shaft 133, thereby ensuring a long-lived accurate reaction of the HST to operation of the main speed change lever 3.

Further, while the speed change arm 134 and the connection rod 129 are arranged in the clutch housing 7, the linkage is not laterally aligned with the HST unit 130 but vertically aligned with the hydraulic pump so as to ensure the compact assembly.

Incidentally, the center unit C3 shown in Figs. 8 and 19 is assembled therein with the auxiliary speed change unit 30'. In the first room R1 of the transmission housing 9, the auxiliary speed change drive shaft 137 is extended coaxially and integrally with the HST output shaft 136, and journalled at a rear end thereof by the front partition wall 9a. On the auxiliary speed change shaft 137 are fixed gears 160, 161 and 162, which constitute the auxiliary speed change gear unit 30' together with the gears 163, 164 and 165 provided on the auxiliary speed change shaft 26.

Description will be given on the front-wheel drive unit 75 arranged in the transmission housing 9. The common front-wheel drive unit 75 is shared among the center units C1, C2 and C3. The front-wheel drive unit 75 is constructed around the front-wheel drive shaft 14 journalled by the center plate 12 (12' or 12") so as to take off power for driving the front wheels from the auxiliary speed change shaft 26. Gears 67 and 68 are freely rotatably provided on the front wheel drive shaft 14 through respective bearings and constantly mesh with respective gears 65 and 66 fixed on a front portion of the auxiliary speed change shaft 26. The gears 65 and 67 constitute a front-wheel speed-reduction gear train, and the gears 66 and 68 constitute a front-wheel speed-increasing gear train.

On the front-wheel drive shaft 14 is fixed a clutch casing 69, provided a front-wheel drive clutch 72 between the gear 67 and the clutch casing 69, and provided the front-wheel speed-increasing clutch 71 between the gear 68 and the clutch casing 69. The front-wheel drive clutch 72 is engaged so as to transmit the rotation of the auxiliary speed change shaft 26 to the front-wheel drive shaft 14 through gears 65 and 67 serving as the front-wheel speed-reduction gear train. The front-wheel speed-increasing clutch 72 is engaged so as to transmit the rotation of the auxiliary speed change shaft 26 to the front-wheel drive shaft 14 through gears 66 and 68 serving as the front-wheel speed-increasing gear train, thereby rotating the front-wheel drive shaft 14 fast. Incidentally, the front-wheel drive clutch 72 and the front-wheel speed-increasing clutch 71 are electro-magnetically controlled hydraulic clutches.

A front end of the front-wheel drive shaft 14 projects forward from the center plate 12 so as to project forward from the clutch housing by properly placing the center plate 12 in the clutch housing 7. Power is transmitted from the projecting front end of the front-wheel drive shaft 14 to a front-wheel differential gearing in a front axle casing through universal joints, a transmission shaft and so on, thereby driving the front wheels 1.

A 2WD/4WD switching device on the cab of the vehicle is operated so as to switch an electromagnetic valve for selectively engaging or disengaging the front-wheel drive clutch 72, which is engaged for driving four wheels of the vehicle when the vehicle is at work, and disengaged for driving two wheels of the vehicle when the vehicle travels on a road.

The vehicle is provided with means for detecting a rotational angle of steering wheel 14. The means is connected to the electromagnetic valve for controlling the forward-wheel speed-increasing clutch 71, so that the front-wheel speed-increasing clutch 71 is engaged when the steering wheel 10 is rotated beyond a certain angle. Accordingly, when the steering angle for turning the vehicle becomes large, the front-wheel speed-increasing clutch 71 is engaged so as to transmit power from the auxiliary speed change shaft 26 to the front-wheel drive shaft 14 through the front-wheel speed-increasing gear train (the gears 66 and 68), thereby rotating the front wheels 1 fast, whereby the vehicle turns without damaging a field surface. Incidentally, when the front-wheel speed-increasing clutch 72 is engaged, the front-wheel drive clutch 72 is automatically disengaged.

In correspondence to different modes, for example, only the front-wheel drive clutch 72 may be provided without the front-wheel speed-increasing clutch 71, as shown in Figs. 4(b) and 7, if the vehicle does not require speed increasing of the front wheels. Alternatively, the ratio of number of teeth between the gears 66 and 68 may be changed so as to change the gear ratio of the front-wheel speed-increasing gear train, thereby changing the increased rotational speed of the front wheels 1.

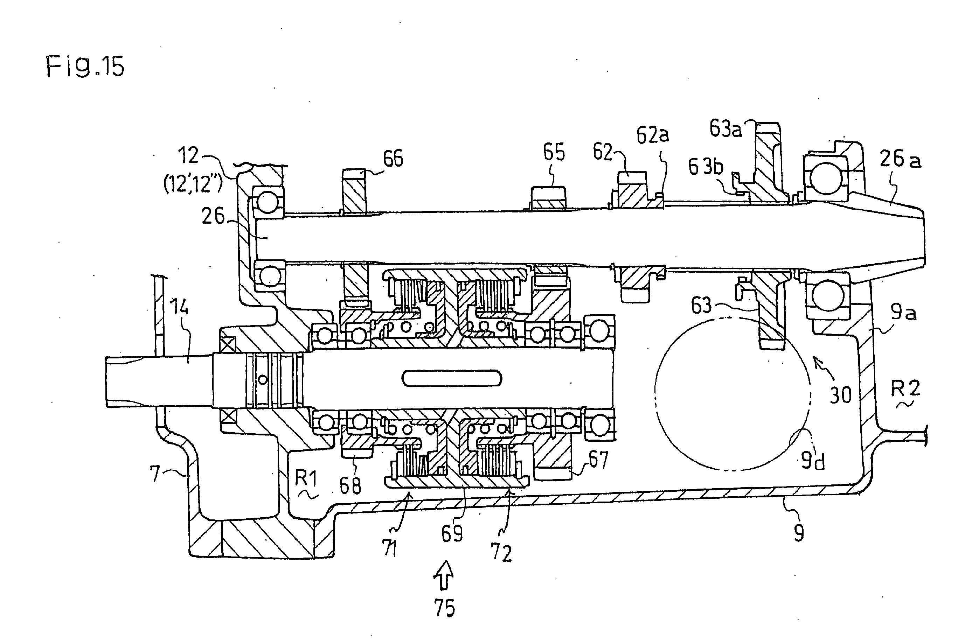

Incidentally, in Fig. 15, the gears 62 and 63 constituting the auxiliary speed change gear unit 30 are provided on the auxiliary speed change shaft 26. Of course, the auxiliary speed change gear unit 30' may replace the auxiliary speed change gear unit 30.

Description will now be given on the PTO transmission system.

Either the PTO speed change unit 80 or 80', when it is assembled with the PTO reduction gear unit 110 so as to constitute the PTO transmission system is assembled in any of the center units C1, C2 and C3.

In Fig. 12 is shown the PTO speed change unit 80 assembled in the center unit C1. The PTO speed change unit 80 selects a speed level among three speed levels of normal directive rotation and a speed level of reversed directive rotation. The PTO speed change unit 80 will be described in accordance with Fig. 12.

The PTO speed change shaft 13 is coaxially extended rearward from the input shaft 28 joumalled by the center plate 12. The PTO speed change shaft 13 is supported through the first, second and third rooms R1, R2 and R3 of the transmission housing 9 while it is journalled by the front and rear partition walls 9a and 9b and the rear cover 8. The PTO transmission shaft 13 is relatively rotatably inserted at the front end thereof into the rear end of the input shaft 28. Incidentally, the PTO speed change shaft 13 according to this embodiment serves as a front shaft 13a and a rear shaft 13b, which are integrally connected with each other. The front shaft 13a is disposed in the front room R1 and journalled at a rear end portion thereof by the front partition wall 9a. The front shaft 13b is connected to the rear shaft 13b in a front portion of the second room R2.

In the first room R1, a PTO first speed gear 81 and a PTO second speed gear 82 are freely rotatably provided on the PTO speed change shaft 13 (the front shaft 13a) and mesh with the second speed counter gear 32 and the third speed counter gear 33 fixed on the hollow shaft 17, respectively.

The input shaft 28 is formed on the rear end thereof with a small gear 18b as well as the input gear 28a meshing with the fourth speed counter gear 34 fixed on the hollow shaft 17. Asmall gear 81a is formed on the PTO first speed gear 81 opposite to the small gear 28b. The PTO speed change shaft 13 (the front shaft 13a) is formed thereon between the small gears 28b and 81a with a spline 13c, on which a slider 83 is fitted. A small gear 82a is formed on the rear end of the PTO second speed gear 82. A slider 85 is fitted on a splined collar 84 fixed on the PTO speed change shaft 13 so as to be allowed to mesh with the small gear 82a.

When the slider 83 meshes with the small gear 81a, the rotational force of the input shaft 28 is transmitted to the PTO speed change shaft 13 through the gears 28a and 34, the hollow shaft 17 and the gears 32 and 81 in the largest deceleration ratio, thereby rotating the PTO speed change shaft 13 at low speed. When the slider 85 meshes with the small gear 82a, the rotational force of the input shaft 28 is transmitted to the PTO speed change shaft 13 through the gears 28a and 34, the hollow shaft 17 and the gears 33 and 82 in a deceleration ratio which is smaller than the above-mentioned ratio, thereby rotating the PTO speed change shaft 13 at middle speed. When the slider 83 meshes with the small gear 28b, the PTO speed change shaft 13 is integrated with the input shaft 28 so as to be rotated at high speed.

Furthermore, the reversal PTO gear 86 is freely rotatably provided on the PTO speed change shaft 13 behind the splined collar 84. Asmall gear 86a is formed on the reversal PTO gear 86 and allowed to mesh with the slider 85. A side surface of the transmission housing 9 is opened (not shown) on a side of the reversal PTO gear 86 and the first speed counter gear 31. As shown in Fig. 14, a reversal shaft 89 is fixed to an utmost end portion of a supporter 88. An idler gear 87 is rotatably supported on the reversal shaft 89. The supporter 88 is inserted into the transmission housing 9 through the side opening thereof, and fixed to the side surface of the transmission housing 9 so as to cover the side opening, so that the idler gear 87 meshes with the reversal PTO gear 86 and the first speed counter gear 31.

Therefore, when the slider 85 meshes with the small gear 86a, power in transmitted from the input shaft 28 to the PTO speed change shaft 13 through the input gear 23a, the fourth speed counter gear 34, the hollow shaft 17, the first counter gear 31, the idler gear 87, the reversal PTO gear 86, the slider 85 and the splined collar 84 so as to rotate the PTO speed change shaft 13 in the reversed direction. Alternatively, a mode having no reversal PTO may be provided, and in this case, the supporter 88 is removed and the side opening of the transmission housing 9 is closed. Alternatively, the reversal PTO may be attached to the device after completing the other assembly work.

In this way, such a compact and economic structure is ensured that the hollow shaft 17 and the counter gears 34, 32, 33 and 31 fixed thereon are shared between the main speed change unit 35 of the center unit C1 and the PTO speed change gear unit 80.

The PTO speed change gear unit 80 assembled in the center unit C3 is shown in Fig. 19. In this case, the rear portion of the input shaft 135 projects rearward from the HST unit 130, and integrally connected to a joint shaft 139 joumalled by the center plate 12". The PTO speed change shaft 13 (the front shaft 13a) is relatively rotatably connected to the joint shaft 139. In the first room R1 of the transmission housing 9, a small gear 139a replacing the small gear 28a and a small gear 139b replacing the small gear 28b are formed on the joint shaft 139. Similarly to the above-mentioned center unit C1, the on the PTO speed change shaft 13 (the front shaft 13a) are provided the slider 83, the PTO first speed gear 81, the PTO second speed gear 82, the slider 85 and the PTO reversal gear 86. The slider 83 is allowed to mesh with the small gear 139b, and the PTO reversal gear 86 meshes with the idler gear 87.

The counter shaft 24' serves as the counter shaft 24 from which the hollow shaft 17 is removed. Counter gears 34', 32', 33' and 31' replacing the above-mentioned counter gears 34, 32, 33 and 31 are fixed on the counter shaft 24' so as to mesh with the gears 139a, 81, 82 and 87, respectively. Accordingly, in the center unit C3, the counter shaft 24' and the counter gears 34', 32', 33' and 31' fixed thereon are not used for changing traveling speed of the vehicle but used for changing PTO speed.

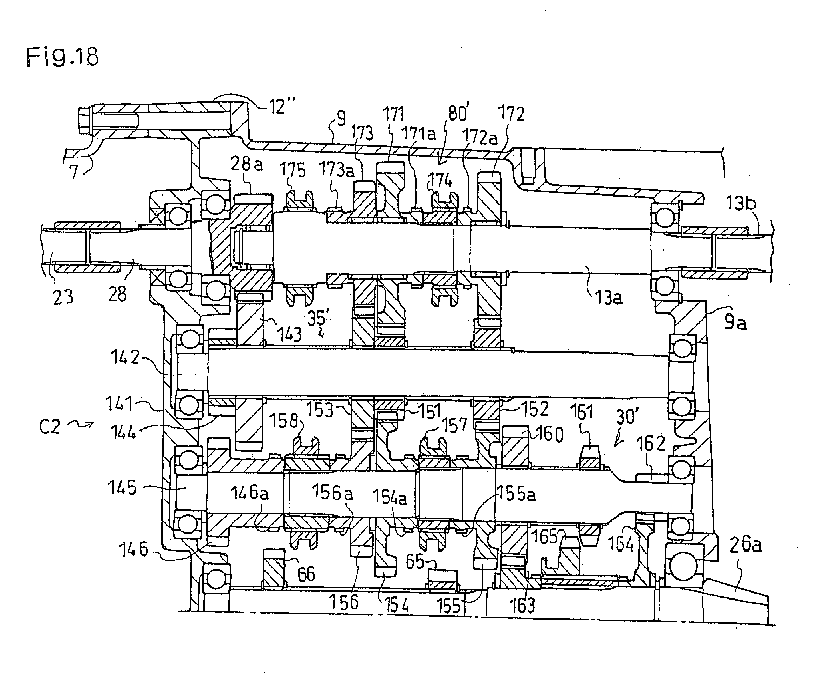

Description will be given on the PTO speed change gear unit 80' having three speed levels of normal directive rotation assembled in the center unit C2, shown in Fig. 18.

In the first room R1 of the transmission housing 9, on the PTO speed change shaft 13 (the front shaft 13a) coaxially and relatively rotatably connected to the input shaft 28 are freely rotatably provided a PTO third speed gear 173, a PTO first speed gear 171 and a PTO second speed gear 172 in a rearward order. A small gear 173a is formed on a front end of the PTO third speed gear 173, a small gear 171a on a rear end of the PTO first speed gear 171, and a small gear 172a on a front end of the PTO second speed gear 172. Aslider 175 is spline-fitted on the PTO speed change shaft 13 between the input gear 28a on the rear end of the input shaft 28 and the small gear 173a so as to be allowed to mesh with the small gear 173a. A slider 174 is spline-fitted on the PTO speed change shaft 13 between the small gears 173a and 172a so as to be allowed to mesh with either the small gear 173a or 172a.

The third speed counter gear 153, the first speed counter gear 151 and the second counter gear 152 in the main speed change gear unit 35' are also used for the PTO speed change gear unit 80' so as to constantly mesh with the PTO third speed gear 173, the PTO first speed gear 171 and the PTO second speed gear 172. In this way, one of the small gears 171a, 172a and 173a is selectively meshed with either the slider 173 or 174 so as to transmit the rotational force of the input shaft 28 to the PTO speed change shaft 13 through the counter shaft 142, thereby establish a rotational speed level of the PTO speed change shaft 13 selected from three speed levels.

In addition, if the PTO speed change gear unit 80 in the center unit C2 is exchanged for the PTO speed change gear unit 80', the gears, sliders etc. on the PTO speed change shaft 13 (the front shaft 13a) are exchanged for those on the PTO speed change shaft 13 shown in Figs. 12 and 19. Also, the PTO reversal gear mechanism shown in Fig. 14 is assembled together. Then, the gears of the PTO speed change gear unit 80' and the PTO reversal gear mechanism are meshed with the respective counter gears 153, 151 and 152 on the counter shaft 142. What should be taken into account is that the gears on the PTO speed change shaft 13 are interchanged and the arrangement position of the PTO reversal gear mechanism is considered in correspondence to the arrangement of the gear group on the PTO speed change shaft 13.

In each of center units C1 and C3, the PTO speed change gear unit 80 may be replaced with the PTO speed change gear unit 80'. In this case, the arrangement of the gears on the PTO speed change shaft 13 may be changed so as to mesh with the gears on the hollow shaft 17 and the counter shaft 24'.

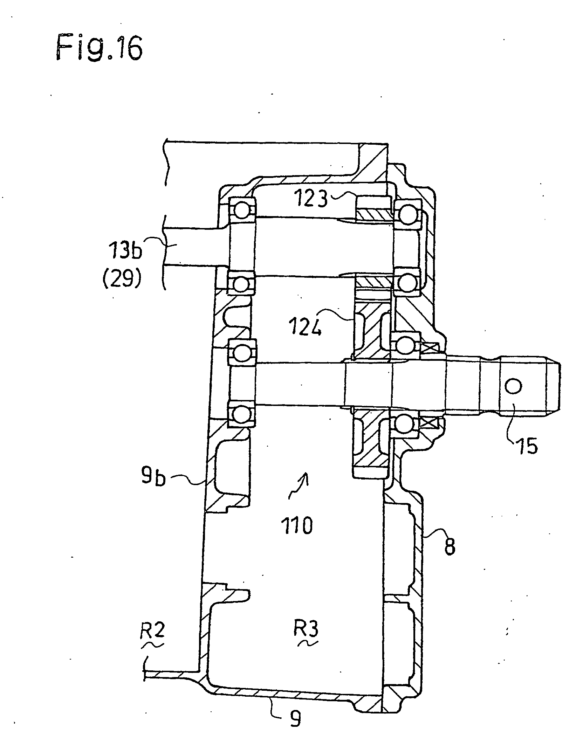

In this way, on the PTO speed change shaft 13 (the front shaft 13a) is constructed either the PTO speed change gear unit 80 or 80' in the first room R1 of the transmission housing 9. Also, the PTO speed change shaft 13 is inserted at the rear portion thereof into the third room R3 and journalled at the rear end thereof by the rear cover 8, as shown in Fig. 16. In the third room R3, a small gear 123 is fixed on the rear portion of the rear shaft 13b and meshes with a diametrically large gear 124 fixed on the PTO shaft 15 so as to constitute the PTO reduction gear unit 110.

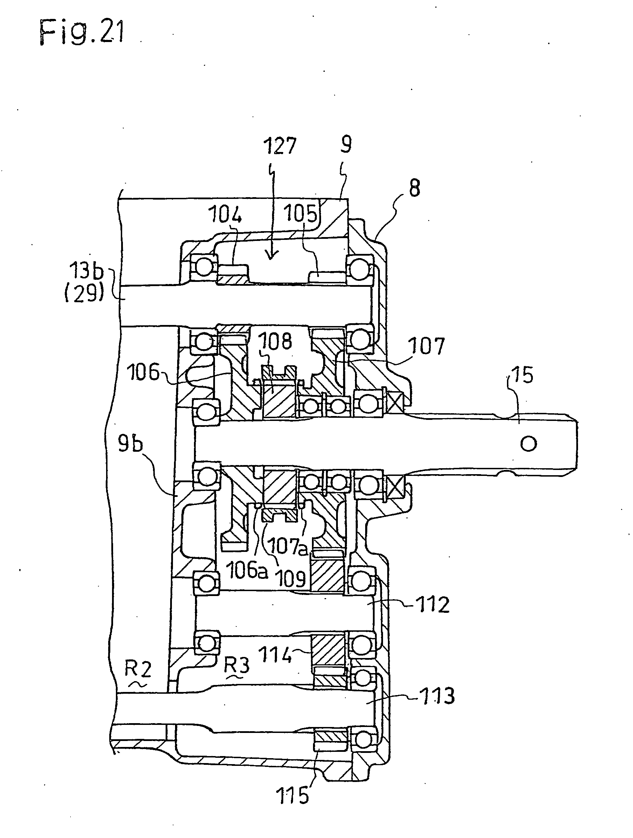

According to the embodiment shown in Figs. 4(d) and 9, instead of the PTO transmission gear train serving as the above-mentioned combination of either the PTO speed change gear unit 80 or 80' in the first room R1 and the PTO reduction gear unit 110 in the third room R3, a rear PTO speed change gear unit 127 having two high and low speed levels provided in the third room R3 while no PTO speed change gear is provided in the first room R1. Description will now be given on the rear PTO speed change gear unit 127 in accordance with Figs. 21 to 24.

As mentioned above, the PTO speed change shaft 13 (the rear shaft 13b) is inserted into the third room R3, and journalled by the rear partition wall 9b and the rear cover 8. As discussed later, when the PTO clutch unit 18 is provided, the PTO speed change shaft 13 (the rear shaft 13b) may be replaced with the PTO clutch shaft 29.

In the third room R3, gears 104 and 105 are fixed on the PTO speed change shaft 13 and mesh with respective follower gears 106 and 107 freely rotatably provided on the (rear) PTO shaft 15. The gears 104 and 106 constitute a high speed gear train, and the gears 105 and 107 a low speed gear train. Small gears 106a and 107a are provided on the respective follower gers 196 and 107. A slider 109 is slidably disposed on the PTO shaft 15 through a splined collar 108 between the small gears 106a and 107a.

Accordingly, the slider 109 is slid so as to mesh with either the small gear 106a or 107a, thereby rotating the PTO shaft 15 at either high or low speed. Incidentally, the slider 109 may be located so as to mesh none of the small gears 106a and 107a, thereby setting the PTO shaft 15 in neutral. Namely, an operation device (such as a lever) for sliding the slider 109 is used for PTO clutch operation as well as for PTO speed change operation.

Power is transmitted from the PTO speed change shaft 13 to the mid PTO gear unit 111 by installing the mid PTO gear mechanism into the third room R3 while using the gear 107 provided on the PTO shaft 15 in the third room R3.

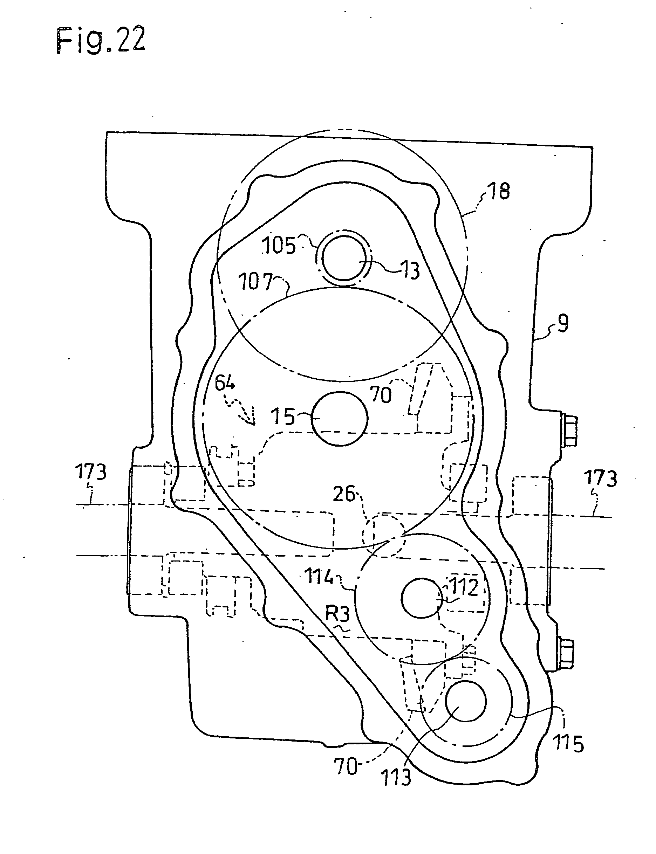

In this regard, as shown in Figs. 21 and 22, in the third room R3 is rotatably supported a counter shaft 112 through bearings between the rear partition wall 9b and the rear cover 8 below the PTO shaft 15. A counter gear 114 is fixed on the counter shaft 112 and constantly meshes with the follower gear 107 which is freely rotatably provided on the PTO shaft 15 as mentioned above.

Further, a mid PTO input shaft 113 is extended from the second room R2 of the transmission housing 9 into the third room R3 below the counter shaft 112 and journalled by the rear cover 8. A gear 115 is fixed on the mid PTO input shaft 113 and meshes with the counter gear 114.

The rear cover 8 can be removed to facilitate the arrangement of gears and shafts, including those of the PTO reduction gear unit 110, into the third room R3.

The mid PTO gear unit 111 is constructed such as shown in Fig. 23. The mid PTO gear unit 111 is inserted into the transmission housing 9 sidewise as shown in Fig. 24 so that a main body of a mid PTO casing 116 of the mid PTO gear unit 111 is laterally exposed on the transmission housing 9. As shown in Fig. 15, an input shaft support 116a extended from the mid PTO casing 116 is inserted through a hole 9d, which is open at a side surface of the transmission housing 9, and disposed behind the front-wheel drive unit 75 in the second room R2 of the transmission housing 9. The mid PTO input shaft 113 is journalled at a front end thereof by the input shaft support 116a in the second room R2. As shown in Fig. 22, in the second room R2, the ring gear 70 of the rear-wheel differential gear unit 64 and the gears of the auxiliary speed change gear unit 30 (30') are prevented from interfering with the mid PTO input shaft 113 which is disposed on a lateral side of the ring gear 70 and below the auxiliary speed change gear unit 30 (30').

As shown in Figs. 23 and 24, the main body portion of the mid PTO casing 116 outside the transmission housing 9 journals the mid PTO shaft 120 horizontally lengthwise. The mid PTO shaft 120 projects forward from the mid PTO casing 116. An intermediate shaft 117 is disposed in parallel between the mid PTO shaft 120 and the mid PTO input shaft 113. The intermediate shaft 117 is fixedly inserted at a front end thereof into the input shaft support 116a. A gear 118 is fixed on the front end of the mid PTO input shaft 113 and meshes with an intermediate gear 119 freely rotatably provided on the intermediate shaft 117. The intermediate gear 119 meshes with the gear 121 freely rotatably provided on a rear portion of the mid PTO shaft 120.

A slider 122 is spline-fitted on the mid PTO shaft 120. Slider 122 is slid so as to mesh with a small gear 121a formed on the gear 121. The slider 122 is connected to an operation shaft 126 through a shifter fork 125. The connection shaft 126 projects outward from the mid PTO casing 116 so as to be manipulated directly or remote-controlled from the cab of the vehicle. In this way, the sliders 122 and others constitute a clutch of the transmission system to the mid PTO shaft 120, i.e., a mid PTO clutch.

The gear 107 in the third room R3 of the transmission housing 9 is freely rotatably provided on the rear PTO shaft 15 so as to transmit the rotational force of the PTO speed change shaft 13 to the mid PTO input shaft 113 whether the rear PTO clutch including the slider 109 is engaged or not, and regardless of the rear PTO speed level. Therefore, the mid PTO clutch is independent of the rear PTO clutch.

The mid PTO shaft 120 projects at a front end thereof forward from the mid PTO casing 116 so as to be drivingly connected to an input portion of a mid-mount working machine through universal joints, etc., thereby driving the mid-mount working machine.

As shown in Fig. 24, the mid PTO input shaft 113, the intermediate shaft 116 and the mid PTO shaft 120, which are aligned in a substantially horizontal line, while the mid PTO shaft 120 is disposed on a lateral side of the transmission housing 9, become higher than the same kind of shafts projecting forward from the lower expanded portion of the conventional transmission housing, thereby increasing the ground clearance of the vehicle. In addition, the mid PTO gear unit 111 is not attached to the front end portion of the transmission housing 9 but attached to the portion thereof behind the front-wheel drive unit 75. Therefore, the mid PTO shaft 120 is disposed behind the conventional position thereof so as to reduce a bend angle of a transmission shaft extended from the mid PTO shaft 120 to the input portion of the mid-mount working machine, thereby improving efficiency and stability of this transmission.

The rear PTO clutch including the slider 109, constructed in the third room R3 of the transmission housing 9, when it is disengaged, cannot stop the rear PTO shaft 15 without inertial rotation. Similarly, the mid PTO clutch including the slider 122, when it is disengaged, cannot stop the mid PTO shaft 120 without inertial rotation.

Further, in the PTO transmission system serving as the combination of the PTO speed change gear unit 80 (or 80') and the PTO reduction gear unit 110 with the PTO speed change shaft 13, the main clutch 21 is disengaged so as to isolate the PTO speed change shaft 13 from power transmission, thereby stopping the PTO shaft 15, however, attended with inertial rotation thereof. Besides, the PTO clutch cannot be operated independently of the clutch operation of the traveling transmission system.

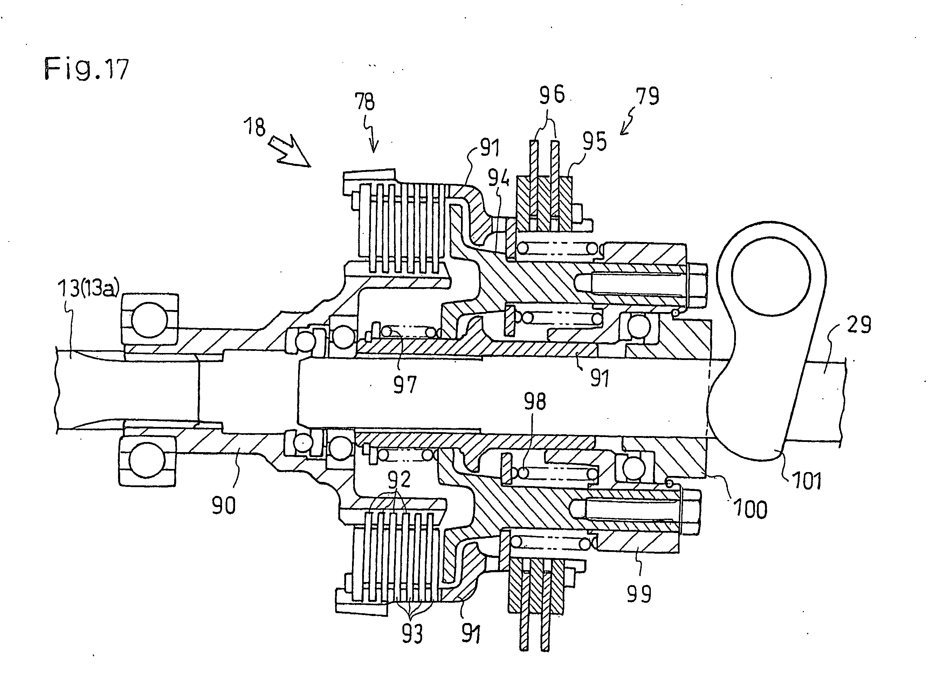

The PTO clutch unit 18, shown in Figs. 6 and 17, is disposed in the second room R2 of the transmission housing 9 above the rear-wheel differential gear unit 64. The PTO clutch unit 18 includes a PTO brake for stopping the inertial rotation when being unclutched. When the mid PTO gear unit 111 is provided, a common portion of the PTO transmission system shared between the rear PTO shaft 15 and the mid PTO shaft 120 is provided for the PTO clutch unit 18. Therefore, the PTO clutch unit 18 evenly applies its clutching and braking effects onto both the PTO shafts 15 and 120.

Description will now be given on the PTO clutch unit 18.

When the PTO clutch unit 18 is disposed in the second room R2, the single PTO speed change shaft 13 (or the integrally connected front and rear shafts 13a and 13b) extended from the rear end of either the input shaft 28 or 135 to the rear cover 8 is required to be divided into front and rear parts through the PTO clutch so that the front and rear parts are relatively rotated when the PTO clutch is disengaged.

In Fig. 17, the PTO clutch unit 18 divides the PTO transmission shaft into the PTO transmission front shaft 13a laid in the first room R1 and a PTO clutch shaft 29 (replacing the PTO transmission rear shaft 13b) laid between the second and third rooms R2 and R3.

Alternatively, according to the embodiment of Fig. 6, the PTO transmission front shaft 13a is also replaced with a single PTO transmission shaft 23', which is fixed at a front end portion thereof to a flywheel 20 in the clutch housing 7 and journalled at a rear end portion thereof by the front partition wall 9a of the transmission housing 9. The PTO transmission shaft 23' is connected to the PTO clutch shaft 29 through the PTO clutch unit 18 in the second room R2 of the transmission housing 9. Namely, the PTO transmission shaft 23' is rotated together with the flywheel 20 as an engine output shaft.

If the HST unit 130 serves as the main speed change mechanism, as shown in Figs. 8, etc., the PTO transmission shaft 23' is also used as a pump shaft of the HST. The reason is that the HST can stop its output shaft (a motor shaft) by setting a movable swash plate of the hydraulic pump regardless of rotation of the PTO transmission shaft 23' serving as the pump shaft.

However, according to the embodiment of Fig. 6, the mechanical main speed change gear unit 35 serves as the main speed change mechanism so that the main clutch 21 is required apart from the PTO clutch unit 18 of the PTO transmission system. Therefore, in the clutch housing 7, a hollow shaft 102 replacing the input shaft 28 is freely rotatably provided on the PTO transmission shaft 23', and the main clutch 21 is interposed between the flywheel 20 and a front end of the hollow shaft 102. Also, in the first room R1 of the transmission housing 9, a traveling input gear 102a replacing the input gear 28a is formed on a rear end of the hollow shaft 102 and meshes with a fourth speed counter gear 34 on the hollow shaft 17.

In this way, the PTO clutch unit 18 is installed in the PTO transmission system so as to make the clutch of PTO transmission system independent of the clutch of traveling transmission system.

Description will be given on the PTO clutch unit 18 shown in Fig. 10. In the second room R2 of the transmission housing 9, a boss 90 is integrally rotatably fitted at a front end portion thereof to the rear end of the PTO transmission front shaft 13a (or the PTO transmission shaft 23' in the embodiment of Fig. 6) and is rotatably supported through a bearing by the front partition wall 9a. On the other hand, a clutch casing 91 is fixed on the front portion of the PTO clutch shaft 29.

Between a front portion of the clutch casing 91 and a rear portion of the boss 90 are alternately arranged friction discs 92 slidably fitted onto the boss 90 and friction discs 93 slidably fitted onto the clutch casing 91. A piston 94 is disposed in the clutch casing 91. A PTO clutch lever 77 is disposed beside the driver's seat 11. When the PTO clutch lever 77 is operated so as to push the piston 94, the friction discs 92 and 93 are pressed against one another so as to transmit power from the boss 90 integrated with the PYO transmission front shaft 13a (or the PTO transmission shaft 23') to the clutch casing 91 integrated with the PTO transmission shaft 29. A spring 97 is interposed between a front end of the piston 94 and the clutch casing 91 so as to bias the piston 94 to disengage the PTO clutch. In this way, a dry PTO clutch 78 is constructed.

Between the transmission housing 9 and a rear outer periphery of the clutch casing 91 are alternately arranged a plurality of friction discs 95 slidably fitted onto the clutch casing 91 and a plurality of friction discs 96 slidably fitted onto the transmission housing 9 so as to constitute a dry PTO brake 79. A spring 98 is interposed between the piston 94 and a retainer 99 slidably provided around a rear portion of the piston 94 so as to bias the piston 94 forward (to engage the PTO clutch 78 and release the PTO brake 79). The force of spring 97 is larger than that of spring 98.

The retainer 99 is provided at a rear portion thereof with a contact member 100 rotatably provided on the PTO transmission shaft 29 so that the contact member 100 abuts against an arm 101 disposed continuously from the PTO clutch lever 77.

In this way, the PTO clutch 78 and the PTO brake 79 are assembled together as a unit, and operation systems to the PTO clutch 78 and the PTO brake 79 are concentrated so that only the PTO clutch lever 77 is operated to move the piston 94 through the arm 101 and so on so as to switch both the PTO clutch and the PTO brake.

The PTO clutch lever 77 is provided for its operational location with three positions, i.e., a PTO clutch on (PTO brake off) position, a neutral position where both the PTO clutch and the PTO brake are switched off, and a PTO brake on (PTO clutch off) position.

As shown in Fig. 19, an upper space of the second room R2 of the transmission housing 9 above the rear-wheel differential gear unit 64 is used for arranging the PTO clutch unit 18 so that the PTO clutch unit 18 approaches the PTO clutch lever 77 disposed above the upper room R2 as much as possible, thereby extremely shortening and simplifying a link between the unit 18 and reducing operational error of the PTO clutch unit 18.

In this structure, when the PTO clutch lever 77 is located at the PTO brake on position, i.e., when the rear PTO shaft 15 (and the mid PTO shaft 120) is not driven and braked, the friction discs 92 and 93 are separated from one another due to the force of the spring 97 biasing the piston 94 rearward so that the rotational force of the PTO transmission front shaft 13a is not transmitted to the PTO clutch shaft 29, and on the other hand, the friction discs 95 and 96 are pressed against one another so as to brake the PTO clutch shaft 29, thereby preventing the working machine (machines) from being unexpectedly driven.

When the PTO clutch lever 77 is set in the PTO neutral position, the arm 101 is rotated so as to push the piston 94 forward through the contact member 100 and the retainer 99 so as to separate the friction discs 95 and 96 from one another, thereby making the PTO clutch shaft 29 free from the transmission housing 9. At this time, the piston 94 does not come to abut against the rearmost friction disc 93 so that the friction discs 92 and 93 are still separated from one another, whereby the PTO clutch shaft 29 is also free together with the rear PTO shaft 15 (and the mid PTO shaft 120) from the PTO transmission front shaft 13a. Accordingly, either the rear or mid PTO shaft 15 or 120 can be easily rotated for facilitating its connection to an input shaft of a corresponding working machine through a joint or so on.

Further, when the PTO clutch lever 77 is shifted to the PTO clutch on position, the arm 101 is further rotated so as to push the piston further forward through the contact member 100 and the retainer 99 so as to press the friction discs 92 and 93 against one another so as to let the boss 90 rotatable together with the clutch casing 91, thereby transmitting power from the PTO transmission front shaft 13a to the PTO clutch shaft 29.

The foregoing description is a preferred embodiment of the present invention, and it is understood that the present disclosure of the preferred form has been changed in the details of construction and the combination and arrangement of parts may be resorted to without departing from the spirit and the scope of the invention as hereinafter claimed.

### Industrial Applicablility of the Invention

As mentioned above, a power transmission device for a vehicle according to the present invention, having a common clutch housing and a common transmission housing, can be constructed corresponding to various modes by such a manner that a center unit as an assembly of a center plate to some kinds of transmission units is selected from various types thereof, or a transmission unit or transmission units are selected from various types thereof, and the selected center unit or the selected transmission unit (or units) are arranged in the common clutch housing and the common transmission housing. Accordingly, a corresponding power transmission device sharing the common clutch housing and the common transmission housing can be provided for either a lawn mower tractor having a mid-mount mower or an ordinary agricultural tractor having an attachment such as a cultivator on the rear portion thereof, for example. Further, due to whether the main transmission mechanism is a mechanical type or a hydraulic type, or due to whether the PTO clutch is used in common with the traveling clutch or separated from it, a corresponding power transmission device can be designed with the common clutch housing and the common transmission housing. Accordingly, the present invention facilitates unification of parts and units and production lines so as to reduce expenses for producing vehicles.

Further, lower expansion of the power transmission device is held so as to ensure a vehicle having a high ground clearance, i.e., to ensure a vehicle well-guarded from obstacles on the ground.

## Claims

1. A power transmission device for a vehicle, comprising:
an engine (5);
a common clutch housing (7) and a common transmission housing (9) successively formed lengthwise from the engine;
an engine output portion (20) provided in the clutch housing (7); and
a differential mechanism (64) for drive axles provided in the transmission housing (9),
**characterized by**
a center unit (C1, C2 or C3) serving as an assembly of a center plate (12, 12' or 12") to which at least one transmission unit (U) selected from various types thereof is attached,
wherein the center plate (12, 12' or 12") of the center unit (C1, C2 or C3) is disposed between the common clutch housing (7) and the common transmission housing (9) so as to arrange the transmission unit or units (U) of the center unit (C1, C2 or C3) in the clutch housing (7) or the transmission housing (9).

2. A power transmission device for a vehicle as set forth in claim 1, wherein a transmission unit (35, 35' or 130) constituting a mechanical or hydraulic main speed change mechanism and a transmission unit (30 or 30') constituting an auxiliary speed change mechanism serve as the transmission units (U) assembled in the center unit (C1, C2 or C3), and are interposed between the engine output portion (20) in the clutch housing (7) and the differential mechanism (64) for drive wheels in the transmission housing (9).

3. A power transmission device for a vehicle as set forth in claim 2, wherein, in the case of application of the center unit (C1 or C2) assembled with the transmission unit (35 or 35') constituting the mechanical main speed change mechanism, the transmission unit (35 or 35') constituting the mechanical main speed change mechanism and the transmission unit (30 or 30') constituting the auxiliary speed change mechanism are disposed in the transmission housing (9).

4. A power transmission device for a vehicle as set forth in claim 3, wherein, in the case of application of the center unit (C1) assembled with the transmission unit (35) constituting the mechanical main speed change mechanism, a transmission unit (50) constituting a reversing mechanism for switching the traveling direction of the vehicle between forward and rearward direction may be attached to the center plate (12) so as to be disposed in the clutch housing (7).

5. A power transmission device for a vehicle as set forth in claim 3, wherein, in the case of application of the center unit (C3) assembled with the transmission unit (130) constituting the hydraulic main speed change mechanism, the transmission unit (130) constituting the hydraulic main speed change mechanism is disposed in the clutch housing (7).

6. A power transmission device for a vehicle as set forth in claim 5, wherein the transmission unit (130) constituting the hydraulic main speed change mechanism disposed in the clutch housing (7) is comprised of a hydraulic pump and a hydraulic motor, which are disposed up and down and mutually fluidly connected, and wherein both an axis of a pump shaft (135) of the hydraulic pump and an axis of a motor shaft (136) of the hydraulic motor are horizontally disposed, and a line connecting the axes is inclined from a vertical line (V) in axial directional view.

7. A power transmission device for a vehicle as set forth in claim 6, wherein a linkage (129) is extended from a control shaft (133) for changing a capacity of the hydraulic pump or the hydraulic motor in the transmission unit (130) constituting the hydraulic main speed change mechanism, and provided in the clutch housing (7).

8. A power transmission device for a vehicle as set forth in claim 2, wherein a transmission unit (75) constitutes a drive mechanism for transmitting power to an axle drive mechanism provided outside the transmission housing (9), and assembled in the center unit (C1, C2 or C3).

9. A power transmission device for a vehicle as set forth in claim 2, wherein a PTO shaft (15) is provided in the transmission housing (9), and wherein a transmission unit (80 or 80') constituting a PTO speed change mechanism can be assembled in the center unit (C1, C2 or C3).

10. A power transmission device for a vehicle as set forth in claim 1, wherein a mid PTO unit (111) having a mid PTO shaft (120) and an input shaft support (116a) is constructed as one of the transmission units (U) so as to be installed into the transmission housing (9), and wherein, at the time of installation thereof, the input shaft support (116a) is inserted into the transmission housing (9) through an insertion hole (9d) opened in a side surface of the transmission housing (9) so as to drivingly connect the mid PTO unit (111) with a transmission mechanism in the transmission housing (9) while the mid PTO shaft (120) is disposed outside the transmission housing (9).

11. A power transmission device for a vehicle as set forth in claim 10, wherein a mid PTO clutch (121a or 122) are provided on the mid PTO shaft (120) which is disposed in a housing (116) of the mid PTO unit (111) provided outside the transmission housing (9).

12. A power transmission device for a vehicle as set forth in claim 10, wherein, in the transmission housing (9), a PTO clutch unit (18), which includes a PTO clutch (78) and a PTO brake (79) arranged in series, can be provided on a common PTO transmission shaft (29) which branches into a mid PTO system and a main PTO system.

13. A power transmission device for a vehicle as set forth in claim 1, wherein, in the transmission housing (9), a PTO clutch unit (18), which includes a PTO clutch (78) and a PTO brake (79) arranged in series, can be provided on a common PTO transmission shaft (29).

14. A power transmission device for a vehicle as set forth in claim 13, wherein the PTO clutch (78) and the PTO brake (79) in the PTO clutch unit (18) are of dry-type.
